# EUROPEAN PATENT APPLICATION

(11) **EP 4 672 556 A1**
(43) Date of publication of application: **31.12.2025**
(21) Application number: 24775256.1
(22) Date of filing: 13.03.2024
(51) Int. Cl.: H02J 50/90, H02J 50/80, H02J 50/00, H04M 1/72463, H04M 19/08, G06F 3/041, H02J 50/10

(54) **WIRELESS CHARGING METHOD AND ELECTRONIC DEVICE SUPPORTING SAME**

(30) Priority: 18.03.2023 KR 20230035517; 05.06.2023 KR 20230072494
(71) Applicant: SAMSUNG ELECTRONICS CO., LTD., Yeongtong-gu Suwon-si, Gyeonggi-do 16677 (KR)
(72) Inventor: CHOI, Yunjeong, Suwon-si Gyeonggi-do 16677 (KR); KIM, Sangheon, Suwon-si Gyeonggi-do 16677 (KR); KIM, Minsoo, Suwon-si Gyeonggi-do 16677 (KR); WOO, Kwangtaek, Suwon-si Gyeonggi-do 16677 (KR); LEE, Soogyu, Suwon-si Gyeonggi-do 16677 (KR); LEE, Jiwoo, Suwon-si Gyeonggi-do 16677 (KR); HAN, Yonggil, Suwon-si Gyeonggi-do 16677 (KR)
(74) Representative: Nederlandsch Octrooibureau
(86) International application number: PCT/KR2024/095481
(87) International publication number: WO 2024/196211

(57) **Abstract**

An electronic device is disclosed. The electronic device may comprise: a housing including a first housing and a second housing slidably coupled to the first housing; a wireless charging coil disposed in one region of the housing; at least one processor; and a memory that stores instructions. The instructions, when executed by the at least one processor, may cause the electronic device to: perform wireless charging with an external electronic device by using the wireless charging coil; identify the occurrence of a designated event during the wireless charging; and, on the basis of identifying the occurrence of the designated event, at least temporarily restrict, during the wireless charging, execution of at least one function having execution thereof defined in response to the occurrence of the designated event. The at least one function may be related to movement of at least a portion of the electronic device.

## Description

### [Technical Field]

Embodiments of the disclosure relate to a wireless charging method and an electronic device supporting the same.

### [Background Art]

With the advancement of digital convergence which integrates various information and communication technologies, electronic devices are providing various functions and/or various services that are integrated with these functions. Accordingly, efficient management of power, which is the backbone of operations of the functions and/or services of the electronic devices, is becoming increasingly important, and, as a part of this, technologies for improving the charging process of batteries supplying the power are being proposed. For example, an electronic device may support wireless charging for a battery of an external electronic device by wirelessly transmitting power signals to the external electronic device using an internal coil. In addition, for example, an electronic device may perform wireless charging for an internal battery thereof by wirelessly receiving power signals from an external electronic device using an internal coil.

The above information is presented as background information only to assist with an understanding of the disclosure. No determination has been made, and no assertion is made, as to whether any of the above might be applicable as prior art with regard to the disclosure.

### [Disclosure of Invention]

### [Solution to Problem]

An electronic device according to an embodiment of the disclosure may include: a housing including a first housing and a second housing which is coupled to the first housing to be slidable relative to the first housing; a wireless charging coil disposed in a region of the housing; at least one processor; and memory storing instructions.

According to an embodiment of the disclosure, the instructions, when executed by the at least one processor, may cause the electronic device to: perform wireless charging with an external electronic device by using the wireless charging coil; identify occurrence of a designated event while performing the wireless charging; and, based on identifying the occurrence of the designated event, at least temporarily restrict, while performing the wireless charging, execution of at least one function defined to be executed in response to the occurrence of the designated event.

According to an embodiment of the disclosure, the at least one function may be related with a movement of at least a part of the electronic device.

According to an embodiment of the disclosure, a wireless charging method of an electronic device including a first housing and a second housing which is coupled to the first housing to be slidable relative to the first housing may include: performing wireless charging with an external electronic device by using a wireless charging coil of the electronic device; identifying occurrence of a designated event while performing the wireless charging; and, based on identifying the occurrence of the designated event, at least temporarily restricting, while performing the wireless charging, execution of at least one function defined to be executed in response to the occurrence of the designated event.

According to an embodiment of the disclosure, the at least one function may be related with a movement of at least a part of the electronic device.

In a computer readable non-transitory storage medium having a computer program recorded thereon to execute a wireless charging method of an electronic device, including a first housing and a second housing which is coupled to the first housing to be slidable relative to the first housing according to embodiments of the disclosure, the computer program may execute the operations of: performing wireless charging with an external electronic device by using a wireless charging coil of the electronic device; identifying occurrence of a designated event while performing the wireless charging; and, based on identifying the occurrence of the designated event, at least temporarily restricting, while performing the wireless charging, execution of at least one function defined to be executed in response to the occurrence of the designated event.

According to embodiments of the disclosure, the at least one function may be related with a movement of at least a part of the electronic device.

### [Brief Description of Drawings]

FIG. 1 is a view illustrating an electronic device in a network environment according to an embodiment.
FIG. 2 is a view illustrating a power management module and a battery of an electronic device according to an embodiment.
FIG. 3 is a view illustrating a first state of an electronic device according to an embodiment.
FIG. 4 is a view illustrating a second state of an electronic device according to an embodiment.
FIG. 5 is a view illustrating a third state of an electronic device according to an embodiment;
FIG. 6 is a view illustrating a fourth state of an electronic device according to an embodiment.
FIG. 7 is a view illustrating an example of a wireless charging coil of an electronic device according to an embodiment.
FIG. 8 is a view illustrating another example of a wireless charging coil of an electronic device according to an embodiment.
FIG. 9 is a view illustrating an example of a wireless charging environment of an electronic device according to an embodiment;
FIG. 10 is a view illustrating a power transmission device according to an embodiment.
FIG. 11 is a view illustrating another example of a wireless charging environment of an electronic device according to an embodiment.
FIG. 12 is a view illustrating a wireless charging process of an electronic device according to an embodiment.
FIG. 13 is a view illustrating components of an electronic device according to an embodiment.
FIG. 14 is a view illustrating an example of an operating method of an electronic device when a wireless charging operation is performed according to an embodiment.
FIG. 15 is a view illustrating an example of a user interface of an electronic device when a wireless charging operation is performed according to an embodiment.
FIG. 16 is a view illustrating an example of a user interface of an external electronic device which is interlocked with an electronic device when a wireless charging operation is performed according to an embodiment.
FIG. 17 is a view illustrating a state of an electronic device when a wireless charging operation is performed according to an embodiment.
FIG. 18 is a view illustrating various examples of an event which occurs when a wireless charging operation is performed according to an embodiment.
FIG. 19 is a view illustrating an operating method of an electronic device when wireless charging is interrupted according to an embodiment.
FIG. 20 is a view illustrating execution of a function of an electronic device when wireless charging is interrupted according to an embodiment.
FIG. 21 is a view illustrating another example of an operating method of an electronic device when a wireless charging operation is performed according to an embodiment.
FIG. 22 is a view illustrating arrangement states of an electronic device and an external electronic device when a wireless charging operation is performed according to an embodiment.
FIG. 23 is a view illustrating a wireless charging coil of a power transmission device according to an embodiment.
FIG. 24 is a view illustrating another example of a user interface of an electronic device when a wireless charging operation is performed according to an embodiment.
FIG. 25 is a view illustrating still another example of a user interface of an electronic device when a wireless charging operation is performed according to an embodiment.
FIG. 26 is a view illustrating yet another example of a user interface of an electronic device when a wireless charging operation is performed according to an embodiment.

Throughout the drawings, the same or similar reference numerals will be used to refer to the same or similar components.

### [Mode for the Invention]

An electronic device may execute a function associated with a designated event based on the occurrence of the event. For example, the electronic device may have at least a part of a housing of the electronic device deformed to provide a screen region of a display that is extended or reduced when the designated event occurs. For example, the electronic device may output an haptic effect (for example, a vibration) to provide a notification when the designated event occurs.

However, since the exaction of a function of the electronic device may be associated with a physical movement and/or a position displacement of the electronic device, efficiency of wireless charging may be reduced or wireless charging may be interrupted when the function of the electronic device is executed during a wireless charging operation between the electronic device and an external electronic device. For example, the physical movement and/or position displacement of the electronic device resulting from the execution of the function of the electronic device may cause at least one of mis-alignment between an internal coil of the electronic device supporting wireless charging and an internal coil of the external electronic device, and deviation of the electronic device from a wireless charging region of the external electronic device. In addition, for example, the physical movement and/or position displacement of the electronic device resulting from the execution of the function of the electronic device may cause collision between the electronic device which wirelessly receives power from a first external electronic device, and a second external electronic device adjacent thereto, and hence, may cause at least one of mis-alignment between the internal coil of the electronic device and an internal coil of the first external electronic device, mis-alignment between the internal coil of the first external electronic device and an internal coil of the second external electronic device, and deviation of the electronic device and/or the second external electronic device from a wireless charging region of the first external electronic device.

Embodiments of the disclosure may provide a wireless charging method which supports stable wireless charging of an electronic device by at least temporarily restricting execution of at least one function that is associated with a physical movement and/or position displacement of the electronic device during a wireless charging (for example, transmission of wireless power signals or reception of wireless power signals) operation of the electronic device, and an electronic device supporting the same.

Hereinafter, various embodiments of the disclosure will be described with reference to the accompanying drawings. It should be appreciated that various embodiments are not intended to limit the disclosure to particular embodiments and include various modifications, equivalents, and/or alternatives of embodiments of the disclosure.

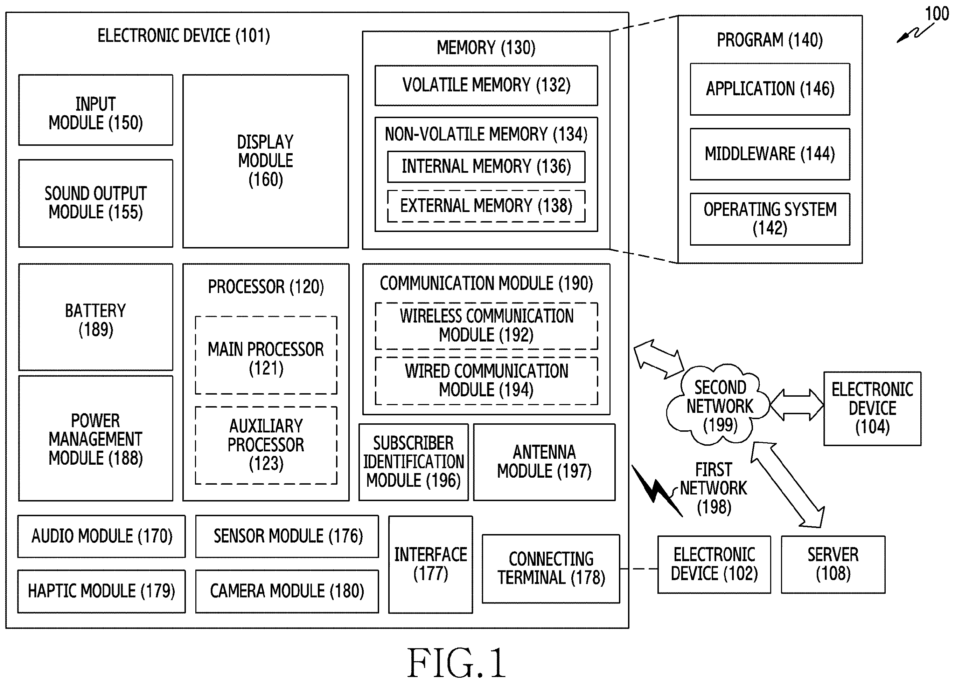

Fig. 1 is a block diagram illustrating an electronic device in a network environment according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

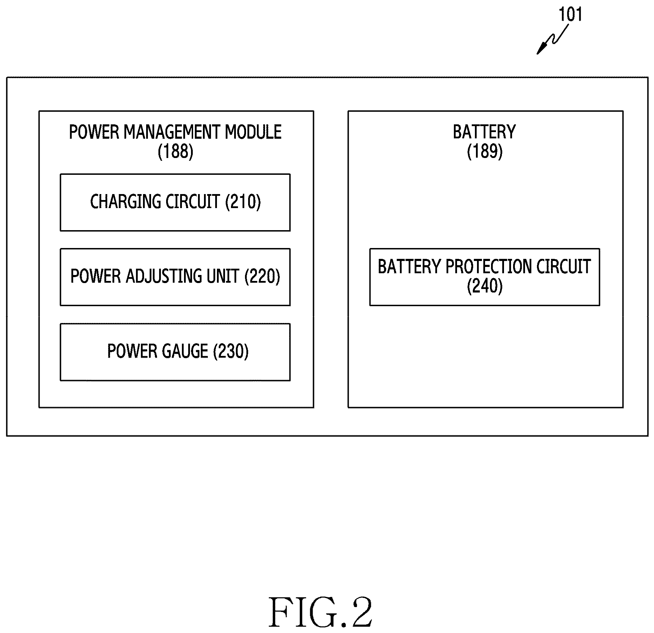

Fig. 2 is a block diagram illustrating the power management module and the battery according to various embodiments.

Referring to Fig. 2, the power management module 188 may include charging circuitry 210, a power adjuster 220, or a power gauge 230. The charging circuitry 210 may charge the battery 189 by using power supplied from an external power source outside the electronic device 101. According to an embodiment, the charging circuitry 210 may select a charging scheme (e.g., normal charging or quick charging) based at least in part on a type of the external power source (e.g., a power outlet, a USB, or wireless charging), magnitude of power suppliable from the external power source (e.g., about 20 Watt or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an embodiment, the power adjuster 220 may be implemented in the form of a low drop out (LDO) regulator or a switching regulator. The power gauge 230 may measure use state information about the battery 189 (e.g., a capacity, a number of times of charging or discharging, a voltage, or a temperature of the battery 189).

The power management module 188 may determine, using, for example, the charging circuitry 210, the power adjuster 220, or the power gauge 230, charging state information (e.g., lifetime, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to abnormal, the power management module 188 may adjust the charging of the battery 189 (e.g., reduce the charging current or voltage, or stop the charging). According to an embodiment, at least some of the functions of the power management module 188 may be performed by an external control device (e.g., the processor 120).

The battery 189, according to an embodiment, may include a protection circuit module (PCM) 240. The PCM 240 may perform one or more of various functions (e.g., a pre-cutoff function) to prevent a performance deterioration of, or a damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage.

According to an embodiment, at least part of the charging state information or use state information regarding the battery 189 may be measured using a corresponding sensor (e.g., a temperature sensor) of the sensor module 176, the power gauge 230, or the power management module 188. According to an embodiment, the corresponding sensor (e.g., a temperature sensor) of the sensor module 176 may be included as part of the PCM 240, or may be disposed near the battery 189 as a separate device.

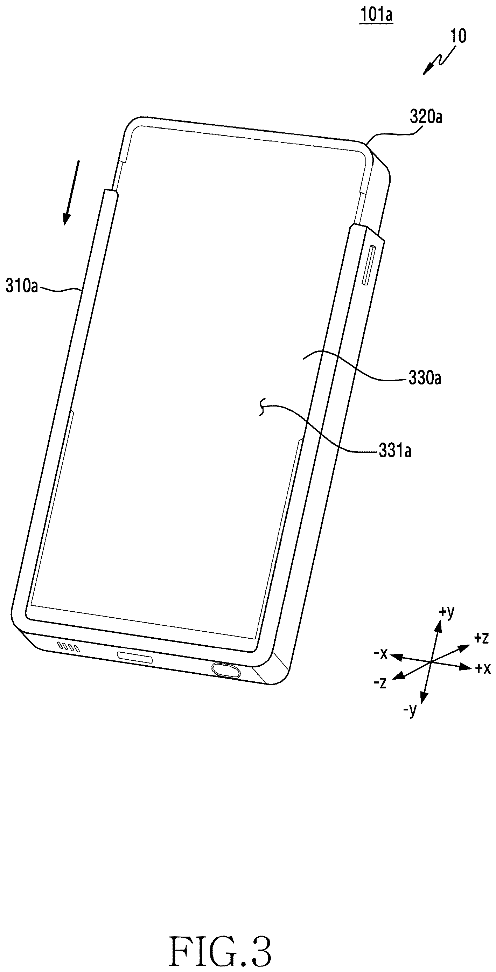

Hereinbelow, a form-factor of an electronic device (for example, the electronic device 101 of FIGS. 1 and/or 2) to which various embodiments are applicable will be described with reference to FIGS. 3, 4, 5, and 6.

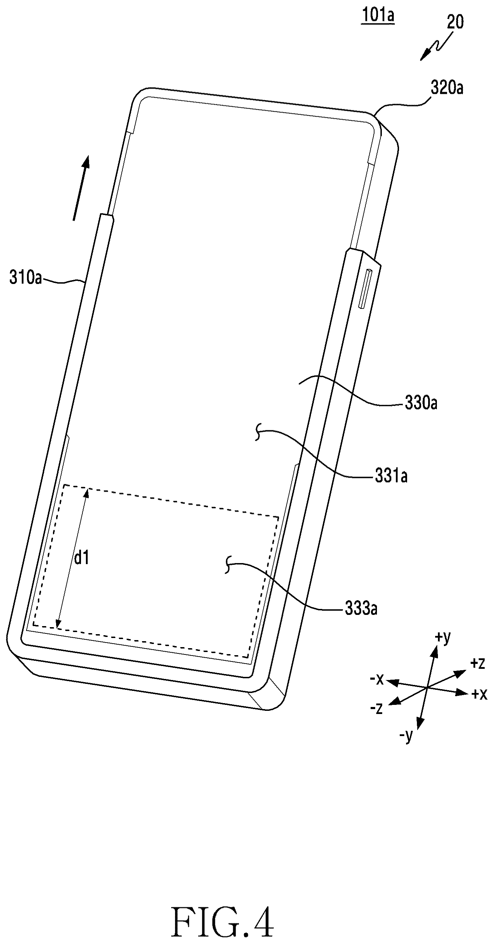

FIG. 3 is a view illustrating a first state of an electronic device according to an embodiment. FIG. 4 is a view illustrating a second state of the electronic device according to an embodiment.

Referring to FIGS. 3 and 4, a flexible display 330a (for example, the display module 160 of FIG. 1) of the electronic device 101a (for example, the electronic device 101 of FIGS. 1 and/or 2) according to an embodiment may have a size (or area) of a screen region (or an active region or a display region) changed in response to transition of the state of the electronic device 101a. For example, the electronic device 101a may have a first state 10 in which a part of a second housing 320a is inserted into the inside of a first housing 310a in response to the second housing 320a sliding in a first direction (for example, -y direction) relative to the first housing 310a (for example, slide-in), and in the first state 10 of the electronic device 101a, a first screen region 331a of the flexible display 330a may be exposed to the outside. For example, the electronic device 101a may have a second state 20 in which a part of the second housing 320a is withdrawn to the outside of the first housing 310a in response to the second housing 320a sliding in a second direction (for example, +y direction), which is opposite the first direction, relative to the first housing 310a (for example, slide-out), and in the second state 20 of the electronic device 101a, the first screen region 331a and a second screen region 333a of the flexible display 330a may be exposed to the outside.

In an embodiment, the electronic device 101a may include a housing which consists of the first housing 310a and the second housing 320a. According to an embodiment, the second housing 320a may be disposed to be slidable relative to the first housing 310a. For example, the second housing 320a may be coupled to the first housing 310a to be slidable (or movable) by a designated first distance d1 between the first direction (for example, -y direction) and the second direction (for example, +y direction) relative to the first housing 310a.

In an embodiment, the first housing 310a may accommodate at least a part of the second housing 320a. For example, the first housing 310a may include a trough having one side opened to accommodate at least a part of the second housing 320a, and may be coupled with the second housing 320a to enclose at least a part of the second housing 320a through the trough.

In an embodiment, the electronic device 101a may include the flexible display 330a that has at least a part exposed to the outside of the housing to form most of the front surface of the electronic device 101a. In an embodiment, the flexible display 330a may include the first screen region 331a and the second screen region 333a which extends from the first screen region 331a, and the second screen region 333a may be selectively exposed to the outside in response to the second housing 320a sliding (or moving) relative to the first housing 310a. For example, in the first state 10 of the electronic device 101a in which the second housing 320a slides in the first direction (for example, -y direction) relative to the first housing 310a, at least a part of the second screen region 333a may be rolled in the first housing 310a and may not be exposed to the outside. In addition, for example, in the second state 20 of the electronic device 101a in which the second housing 320a slides in the second direction (for example, +y direction) relative to the first housing 310a, at least a part of the second screen region 333a may be rolled out from the inside of the first housing 310a and may be exposed to the outside. Based on this, the size (or area) of the screen region (or active region or display region) of the flexible display 330a may be changed (or extended or reduced) in response to the second housing 320a sliding relative to the first housing 310a.

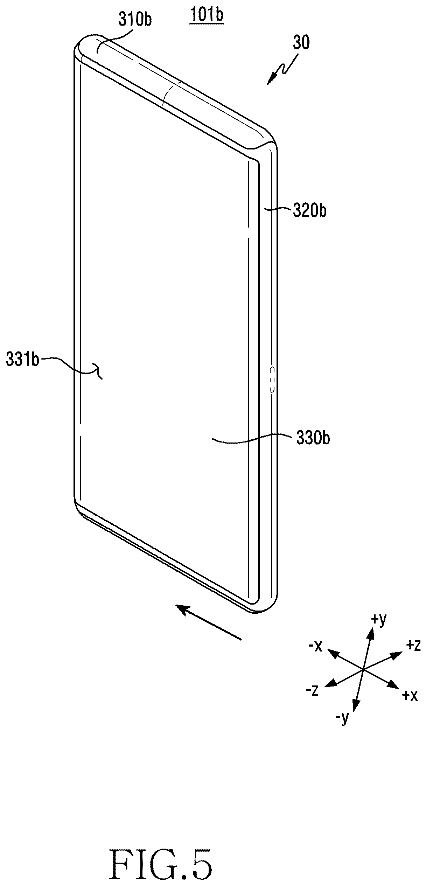

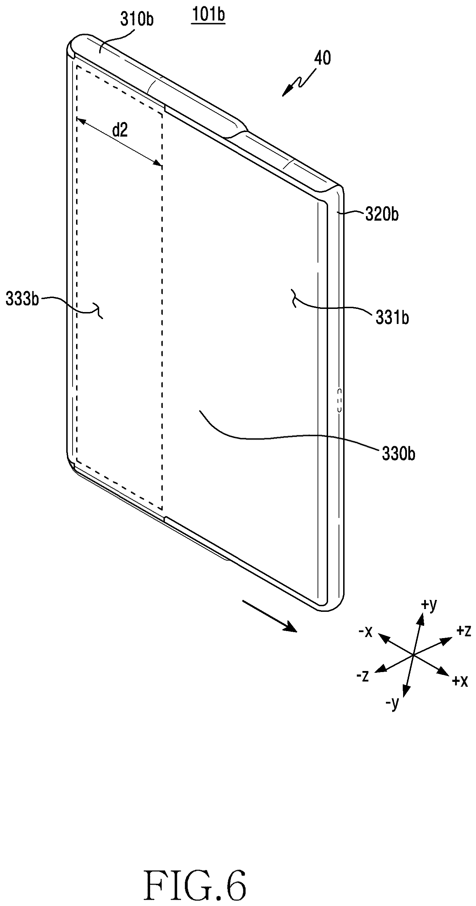

FIG. 5 is a view illustrating a third state of an electronic device according to an embodiment. FIG. 6 is a view illustrating a fourth state of the electronic device according to an embodiment.

Referring to FIGS. 5 and 6, a flexible display 330b (for example, the display module 160 of FIG. 1) of the electronic device 101b (for example, the electronic device 101 of FIGS. 1 and/or 2) according to an embodiment may have a size (or area) of a screen region (or an active region or a display region) changed in response to transition of the state of the electronic device 101b. For example, the electronic device 101b may have a third state 30 in which a part of a second housing 320b is inserted into the inside of a first housing 310b in response to the second housing 320b sliding in a third direction (for example, -x direction) relative to the first housing 310b (for example, slide-in), and in the third state 30 of the electronic device 101b, a first screen region 331b of the flexible display 330b may be exposed to the outside. For example, the electronic device 101b may have a fourth state 40 in which a part of the second housing 320b is withdrawn to the outside of the first housing 310b in response to the second housing 320b sliding in a fourth direction (for example, +x direction), which is opposite the third direction, relative to the first housing 310b (for example, slide-out), and in the fourth state 40 of the electronic device 101b, the first screen region 331b and a second screen region 333b of the flexible display 330b may be exposed to the outside.

In an embodiment, the electronic device 101b may include a housing which consists of the first housing 310b and the second housing 320b. According to an embodiment, the second housing 320b may be disposed to be slidable relative to the first housing 310b. For example, the second housing 320b may be coupled to the first housing 310b to be slidable (or movable) by a designated second distance d2 between the third direction (for example, -x direction) and the fourth direction (for example, +x direction) relative to the first housing 310b.

In an embodiment, the first housing 310b may accommodate at least a part of the second housing 320b. For example, the first housing 310b may include a trough having one side opened to accommodate at least a part of the second housing 320b, and may be coupled with the second housing 320b to enclose at least a part of the second housing 320b through the trough.

In an embodiment, the electronic device 101b may include the flexible display 330b that has at least a part exposed to the outside of the housing to form most of the front surface of the electronic device 101b. In an embodiment, the flexible display 330b may include the first screen region 331b and the second screen region 333b which extends from the first screen region 331b, and the second screen region 333b may be selectively exposed to the outside in response to the second housing 320b sliding (or moving) relative to the first housing 310b. For example, in the third state 30 of the electronic device 101b in which the second housing 320b slides in the third direction (for example, -x direction) relative to the first housing 310b, at least a part of the second screen region 333b may be rolled in the first housing 310b and may not be exposed to the outside. In addition, for example, in the fourth state 40 of the electronic device 101b in which the second housing 320b slides in the fourth direction (for example, +x direction) relative to the first housing 310b, at least a part of the second screen region 333b may be rolled out from the inside of the first housing 310b and may be exposed to the outside. Based on this, the size (or area) of the screen region (or active region or display region) of the flexible display 330b may be changed (or extended or reduced) in response to the second housing 320b sliding relative to the first housing 310b.

In the embodiment of FIGS. 5 and 6, it is illustrated that the electronic device 101b has the third state 30 in response to the second housing 320b sliding in the third direction (for example, -x direction) relative to the first housing 310b, or has the fourth state 40 in response to the second housing 320b sliding in the fourth direction (for example, +x direction) relative to the first housing 310b, but the reverse is also possible. For example, the electronic device 101b may have the third state 30 in response to the second housing 320b sliding in the fourth direction (for example, +x direction) relative to the first housing 310b, or may have the fourth state 40 in response to the second housing 320b sliding in the third direction (for example, -x direction) relative to the first housing 310b.

According to various embodiments, the housing of the electronic device 101b may further include a third housing although it is not illustrated. In an embodiment, the third housing may be coupled to the first housing 310b to be slidable between the third direction (for example, -x direction) and the fourth direction (for example, +x direction) relative to the first housing 310b, and may be disposed in the opposite direction of the second housing 320b with reference to the first housing 310b. Based on this, the flexible display 330b may further include a third screen region that is selectively exposed to the outside in response to the third housing sliding relative to the first housing 310b. For example, in the third state 30 of the electronic device 310b in which the third housing slides in the fourth direction (for example, +x direction) relative to the first housing 310b, at least a part of the third screen region may be rolled in the first housing 310b and may not be exposed to the outside. In addition, for example, in the fourth state 40 of the electronic device 101b in which the third housing slides in the third direction (for example, -x direction) relative to the first housing 310b, at least a part of the third screen region may be rolled out from the inside of the first housing 310b and may be exposed to the outside. Based on this, the size (or area) of the screen region (or active region or display region) of the flexible display 330b may be changed (or extended or reduced) in response to the second housing 320b and/or the third housing sliding relative to the first housing 310b.

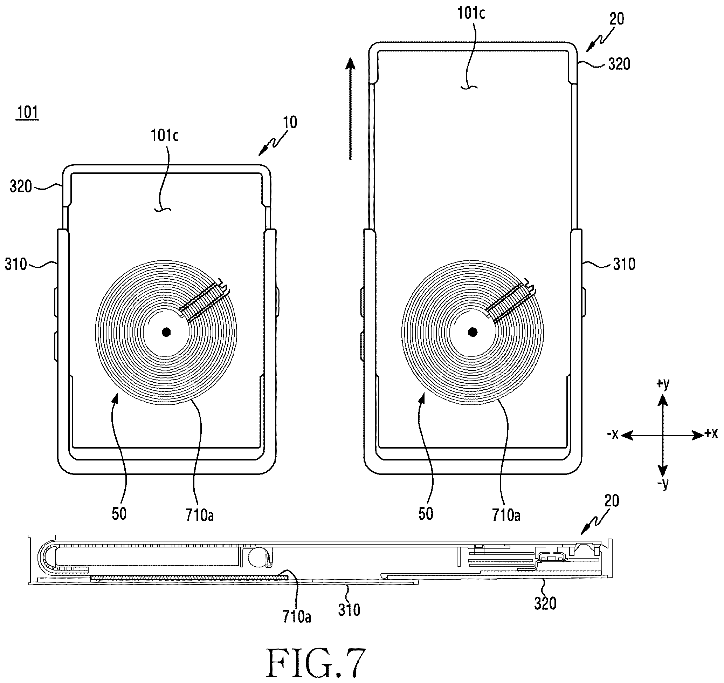

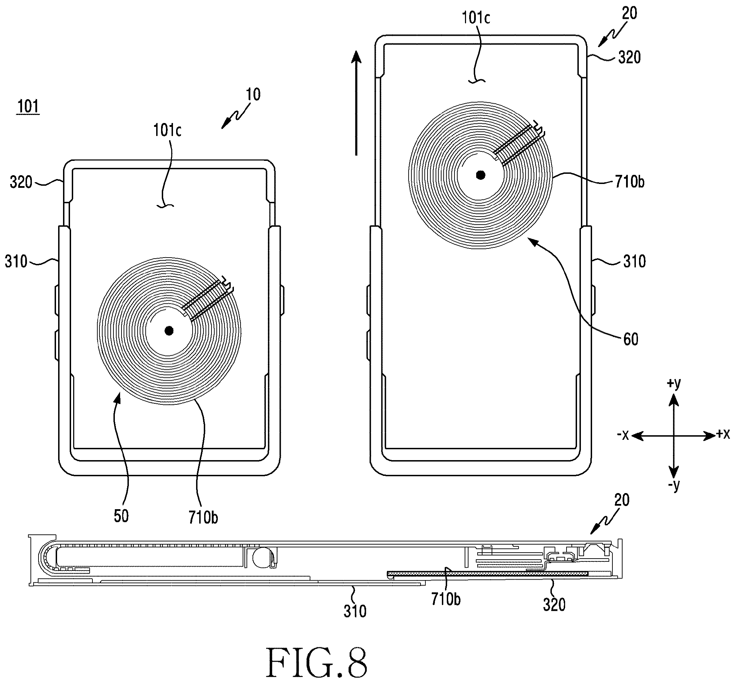

FIG. 7 is a view illustrating an example of a wireless charging coil of an electronic device according to an embodiment. FIG. 8 is a view illustrating another example of a wireless charging coil of an electronic device according to an embodiment.

Referring to FIGS. 7 and 8, the electronic device 101 according to an embodiment may include a wireless charging coil 710a or 710b which is disposed in a certain region of a housing to support wireless charging (for example, transmission of wireless power signals and/or reception of wireless power signals) of the electronic device 101.

Referring to FIG. 7, the wireless charging coil 710a according to an embodiment may be disposed in a certain region of a first housing 310 to face a rear surface 101c of the electronic device 101 in an inner space of the electronic device 101 that is defined by the housing. In an embodiment, the certain region of the first housing 310 may form at least a part of the rear surface 101c of the electronic device 101. In this case, in a first state 10 of the electronic device 101 in which a second housing 320 slides in a first direction (for example, -y direction) relative to the first housing 310 (for example, slide-in), the wireless charging coil 710a disposed in the certain region of the first housing 310 may be positioned in a first region 50 of the electronic device 101. In a second state 20 of the electronic device 101 in which the second housing 320 slides in a second direction (for example, +y direction) relative to the first housing 310 (for example, slide-out), the wireless charging coil 710a disposed in the certain region of the first housing 310 may be positioned in the first region 50 of the electronic deice 101, which is the same as in the first state 10 of the electronic device 101. Based on this, the wireless charging coil 710a according to an embodiment may maintain its position in the first region 50 of the electronic device 101 regardless of the state transition of the electronic device 101.

Referring to FIG. 8, the wireless charging coil 710b according to an embodiment may be disposed in a certain region of the second housing 320 to face the rear surface 101c of the electronic device 101 in the inner space of the electronic device 101 that is defined by the housing. According to an embodiment, the certain region of the second housing 320 may be aligned with the certain region of the first housing 310 that forms at least a part of the rear surface 101c of the electronic device 101 adjacent thereto in the inner space of the electronic device 101, and may have its position changed in response to the second housing 320 sliding relative to the first housing 310. In this case, in the first state 10 of the electronic device 101 in which the second housing 320 slides in the first direction (for example, -y direction) relative to the first housing 310 (for example, slide-in), the wireless charging coil 710b disposed in the certain region of the second housing 320 may be disposed in the first region 50 of the electronic device 101. In addition, in the second state 20 of the electronic device 101 in which the second housing 320 slides in the second direction (for example, +y direction) relative to the first housing 310 (for example, slide-out), the wireless charging coil 710b disposed in the certain region of the second housing 320 may be pulled in the second direction (for example, +y direction) in response to the sliding of the second housing 320, thereby moving from the first region 50 of the electronic device 101 to a second region 60. Based on this, the wireless charging coil 710b according to an embodiment may have its position changed between the first region 50 and the second region 60 of the electronic device 101 in response to the state transition of the electronic device 101.

In the embodiment of FIGS. 7 and 8, the position of the wireless charging coil 710a or 710b is illustrated with reference to the transition between the first state 10 and the second state 20 of the electronic device 101, but similarly, the position of the wireless charging coil 710a or 710b may be maintained in a specific region of the electronic device 101 or may be changed from a specific region to another region with respect to transition between a third state (for example, the third state 30 of FIG. 5) and a fourth state (for example, the fourth state 40 of FIG. 6) of the electronic device 101.

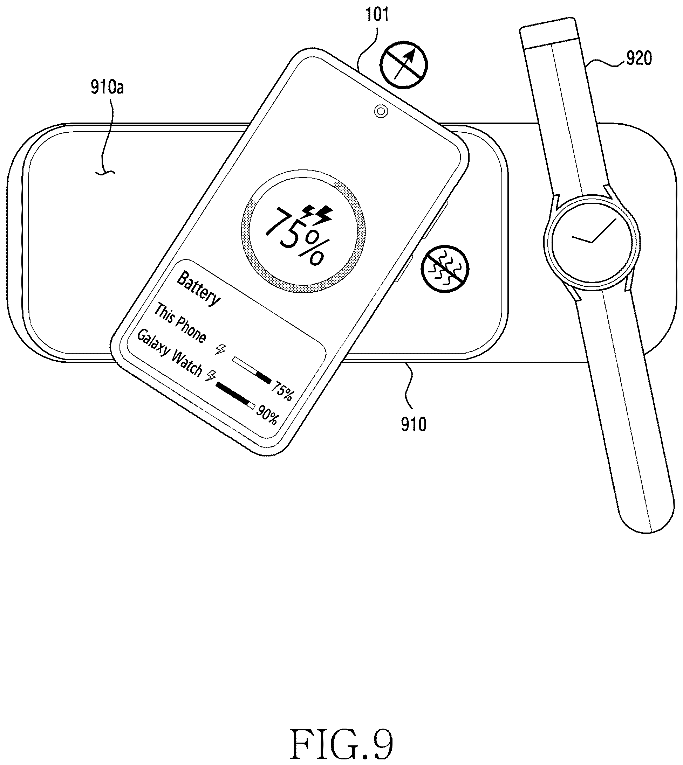

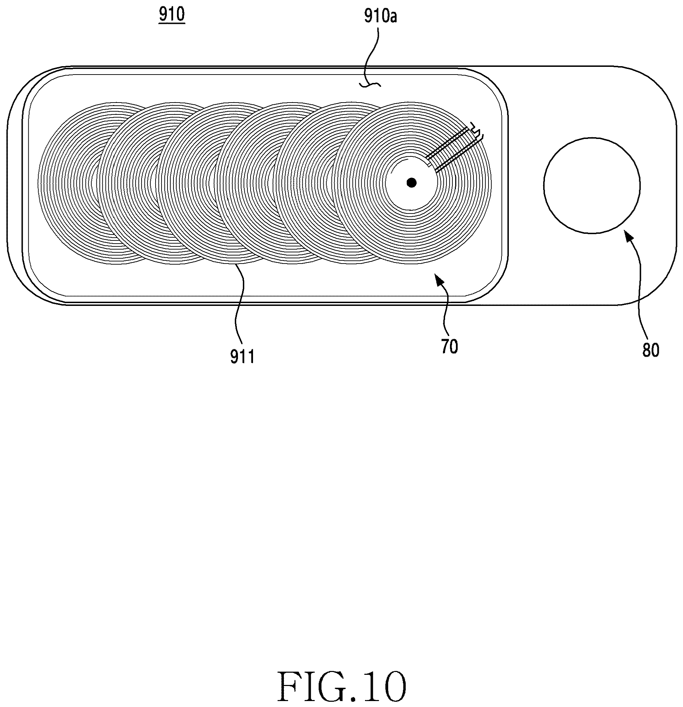

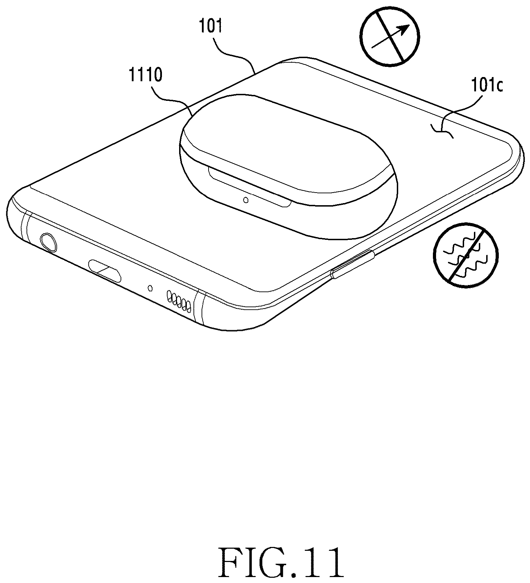

FIG. 9 is a view illustrating an example of a wireless charging environment of an electronic device according to an embodiment. FIG. 10 is a view illustrating a power transmission device according to an embodiment. FIG. 11 is a view illustrating another example of a wireless charging environment of an electronic device according to an embodiment.

Referring to FIGS. 9 and 10, the electronic device 101 according to an embodiment may operate as a power reception device to wirelessly receive power signals from an external electronic device 910 (for example, a power transmission device).

In an embodiment, the electronic device 101 may be disposed on a front surface 910a of the external electronic device 910 (for example, may contact the front surface 910a or hover within a designated distance from the front surface 910a), such that at least a part of a wireless charging coil (for example, the wireless charging coil 710a of FIG. 7 or the wireless charging coil 710b of FIG. 8) included in the electronic device 101 is aligned with at least a part of a wireless charging coil 911 included in the external electronic device 910, and may receive power signals. In an embodiment, the electronic device 101 may receive power signals from the external electronic device 910, based on a state in which a battery (for example, the battery 189 of FIGS. 1 and/or 2) included in the electronic device 101 is discharged or the amount of available power of the battery 189 is less than a designated level, and may charge the battery 189 using the power signals. For example, a magnetic field generated in the wireless charging coil 911 of the external electronic device 910 may generate an induced electromotive force in the wireless charging coil 710a or 710b of the electronic device 101 which is disposed on the front surface 910a of the external electronic device 910, and the electronic device 101 may charge the battery 189 using the induced electromotive force.

In an embodiment, the external electronic device 910 may include the wireless charging coil 911 disposed to face the front surface 910a of the external electronic device 910 in the inner space of the external electronic device 910. According to various embodiments, there is no limitation to the number of wireless charging coils 911 included in the external electronic device 910, but a plurality of wireless charging coils 911 may be configured to implement most of the front surface 910a of the external electronic device 910 as a wireless charging region. For example, the external electronic device 910 may include at least one wireless charging coil disposed to cover a first region 70 constituting a part of the front surface 910a, and at least one wireless charging coil disposed to cover a second region 80 constituting the other part of the front surface 910a. Based on this, the external electronic device 910 may support multi wireless charging to provide a plurality of wireless charging regions through the first region 70 and the second region 80 of the front surface 910a.

In an embodiment, the wireless charging coil 911 included in the external electronic device 910 may be controlled to be in an active state or an inactive state in the wireless charging operation of the external electronic device 910. For example, at least one wireless charging coil that corresponds to the position of a wireless charging coil of a power reception device disposed on the front surface 910a of the external electronic device 910 (or overlaps at least a part of the wireless charging coil of the power reception device) may be controlled to be in the active state to transmit power signals to the power reception device. In addition, for example, at least one wireless charging coil that does not correspond to the position of the wireless charging coil of the power reception device disposed on the front surface 910a of the external electronic device 910 (or does not overlap the wireless charging coil of the power reception device) may be controlled to be in the inactive state in relation to prevention of heating and/or power consumption.

In an embodiment, it may be determined whether a first wireless charging coil included in the external electronic device 910 and a second wireless charging coil included in the power reception device correspond to each other (or overlap each other) with reference to a center point of the first wireless charging coil. For example, based on more than a certain region of the first wireless charging coil including the center point of the first wireless charging coil corresponding (overlapping) to the second wireless charging coil, the first wireless charging coil may be controlled to be in the active state to wirelessly transmit wireless power to the second wireless charging coil. In another example, based on the center point of the first wireless charging coil not corresponding to (not overlapping) the second wireless charging coil, the first wireless charging coil may be controlled to be in the inactive state.

In an embodiment, the power reception device that may be disposed in the first region 70 of the front surface 910a of the external electronic device 910 and the power reception device that may be disposed in the second region 80 of the front surface 910a may be heterogeneous devices. For example, at least one of a smartphone (for example, the electronic device 101), a wireless earphone, and a wireless earphone case may be disposed in the first region 70 of the front surface 910a of the external electronic device 910 to be wirelessly charged, and a smart watch 920 or a smart band may be disposed in the second region 80 of the front surface 910a of the external electronic device 910 to be wirelessly charged.

Referring to FIG. 11, an electronic device 101 according to an embodiment may operate as a power transmission device which executes a wireless charging Tx (transmit data) function (or a wireless power transmission function) to wirelessly transmit power signals to an external electronic device 1110 (for example, a power reception device).

In an embodiment, the electronic device 101 may be disposed under the external electronic device 1110 (for example, may contact a rear surface of the external electronic device 1110 or hover within a designated distance from the rear surface of the external electronic device 1110), such that at least a part of a wireless charging coil (for example, the wireless charging coil 710a of FIG. 7 or the wireless charging coil 710b of FIG. 8) included in the electronic device 101 is aligned with at least a part of a wireless charging coil included in the external electronic device 1110. For example, the electronic device 101 may be disposed under the external electronic device 1110 such that a rear surface 101c of the electronic device 101 adjacent to the wireless charging coil 710a or 710b disposed in the inner space of the electronic device 101 faces the rear surface of the external electronic device 1110, and may transmit power signals. In an embodiment, based on a state in which a battery included in the external electronic device 1110 is discharged or the amount of available power of the battery is less than a designated level, the electronic device 101 may transmit power signals to the external electronic device 1110 to support the external electronic device 1110 to charge the battery using the power signals.

In the embodiment of FIG. 9 and the embodiment of FIG. 11, when the wireless charging operation is performed between the electronic device 101 and the external electronic device 910 or 1110 (for example, between the power transmission device or the power reception device), at least some of the functions executed by the electronic device 101 may degrade efficiency of wireless charging or may interrupt the wireless charging. In various embodiments, at least some of the functions of the electronic device 101 may be related (or associated) with a physical movement and/or a position displacement of at least a part of the electronic device 101, and for example, may include at least one of sliding of a second housing (for example, the second housing 320a of FIGS. 3 and/or 4, or the second housing 320b of FIGS. 5 and/or 6, or the second housing 320 of FIGS. 7 and/or 8) relative to a first housing (for example, the first housing 310a of FIGS. 3 and/or 4, or the first housing 310b of FIGS. 5 and 6, or the first housing 310 of FIGS. 7 and/or 8), and a haptic (for example, vibration) output of the electronic device 101.

For example, at least one of the sliding function and the haptic output function of the electronic device 101 which is executed in the wireless charging operation may cause at least a part of the electronic device 101 to physically move or may cause a position of the electronic device to be displaced, and accordingly, may cause at least one of mis-alignment between the wireless charging coil 710a or 710b included in the electronic device 101 and a wireless charging coil included in an external electronic device (for example, 910 or 1110), and deviation of the electronic device 101 from a wireless charging region of the external electronic device 910. In addition, for example, at least one of the sliding function and the haptic output function of the electronic device 101 which is executed in the wireless charging operation may cause at least a part of the electronic device 101 to physically move or may cause the position of the electronic device to be displaced, causing collision between the electronic device 101 and an external electronic device (for example, 920) adjacent thereto, and accordingly, may cause at least one of mis-alignment between the wireless charging coil 710a or 710b of the electronic device 101 and the wireless charging coil of the external electronic device (for example, 910), mis-alignment between the wireless charging coils of the external electronic devices (for example, 910 and 920), and deviation of the electronic device 101 and/or the external electronic device (for example, 920) from the wireless charging region of the external electronic device (for example, 910).

In embodiments which will be described hereinbelow with reference to the drawings, the electronic device 101 may at least temporarily restrict execution of at least one function (for example, a sliding function of a housing and/or a haptic output function) related with a physical movement and/or position displacement of the electronic device 101 while performing wireless charging (for example, transmission of wireless power signals or reception of wireless power signals) with an external electronic device 910 or 1110.

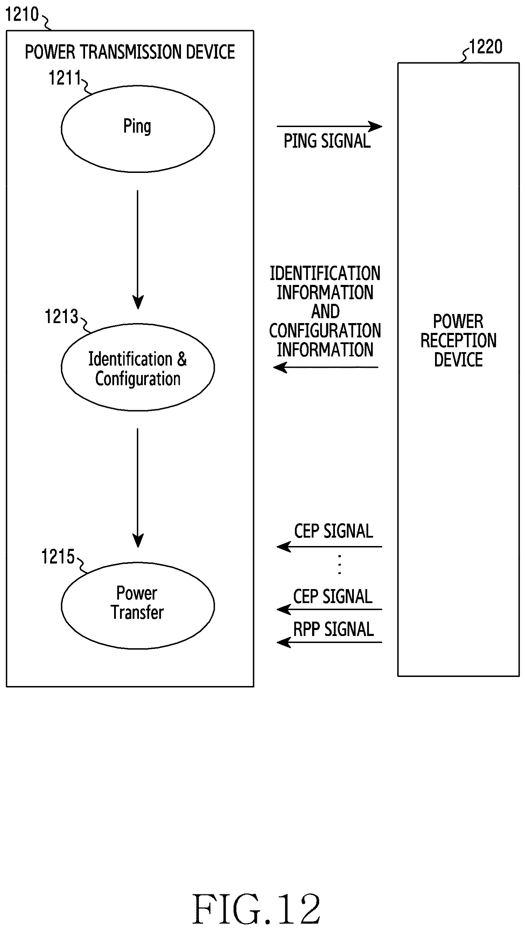

FIG. 12 is a view illustrating a wireless charging process of an electronic device according to an embodiment.

In the embodiment of FIG. 12 which will be described hereinbelow, an electronic device (for example, the electronic device 101 of FIGS. 1 and/or 2) according to an embodiment may include a power transmission device (for example, a power transmission device 1210 of FIG. 12) which operates as a wireless charging Tx (transmit data) function (or a wireless power transmission function), and/or a power reception device (for example, a power reception device 1220 of FIG. 12) which operates as a wireless charging Rx (receive data) function (or a wireless power reception function).

Referring to FIG. 12, the power transmission device 1210 according to an embodiment may perform a ping operation 1211 while waiting (or preparing) for wireless charging. For example, the power transmission device 1210 may perform the ping operation 1211 to transmit a ping signal in a digital or analogue form for detecting a target of wireless charging.

According to an embodiment, the power transmission device 1210 may determine at least one parameter related with transmission of the pin signal in the ping operation 1211. For example, the power transmission device 1210 may determine a parameter related to at least one of a frequency of the ping signal, a transmission voltage of the ping signal, and a transmission period of the ping signal. In various embodiments, the at least one parameter may be set as default at the initial setting related to a wireless charging system of the power transmission device 1210.

In an embodiment, the power transmission device 1210 may receive a response signal to the ping signal from the power reception device 1220, and may detect the presence of the power reception device 1220 (for example, contact of the power reception device 1220 to the power transmission device 1210, or approach of the power reception device 1220 within a designated distance from the power transmission device 1210), based on the reception of the response signal.

In an embodiment, based on detecting the presence of the power reception device 1220, the power transmission device 1210 may establish a communication connection (or a communication channel) with the power reception device 1220 in an identification and configuration operation 1213. For example, the power transmission device 1210 may be connected with the power reception device 1220 through communication of an in-band method which transmits and receives signals or data by using at least one of a wireless communication module (for example, the wireless communication module 192 of FIG. 1) and a wireless charging coil (for example, the wireless charging coil 710a of FIG. 7 or the wireless charging coil 710b of FIG. 8) included in the power transmission device 1210. In addition, for example, the power transmission device 1210 may be connected with the power reception device 1220 through communication of an out-band method which transmits and receives signals or data by using at least one of the wireless communication module 192 and an antenna module (for example, the antenna module 197 of FIG. 1) included in the power transmission device 1210. In various embodiments, the communication (or communication channel) connection between the power transmission device 1210 and the power reception device 1220 may include a series of processes in which a certain device transmits signals for requesting the communication connection and another device identifies the signals (or responds to the signals).

In an embodiment, the power transmission device 1210 may receive at least one signal or piece of data from the power reception device 1220 by using the communication connected with the power reception device 1220. For example, the power transmission device 1210 may receive a signal or data including information (for example, wireless communication ID of the power reception device 1220) for identifying the power reception device 1220 from the power reception device 1220. In an embodiment, the power transmission device 1210 may determine the power reception device 1220 detected in the ping operation 1211 as an effective device for wireless charging, based on the information received from the power reception device 1220 corresponding to information prerecorded in the power transmission device 1210 (for example, a wireless communication ID of at least one external electronic device identified as sharing wireless power with the power transmission device 1210). According to various embodiments, the power transmission device 1210 may receive, from the power reception device 1220 using the communication, a signal or data including a variety of configuration information that is required for the power reception device 1220 to wirelessly receive power.

In an embodiment, based on determining that the power reception device 1220 is an effective device, the power transmission device 1210 may wirelessly transmit power signals to the power reception device 1220 in a power transmission operation 1215. According to an embodiment, the power transmission device 1210 may receive at least one signal or piece of data from the power reception device 1220 by using communication connected with the power reception device 1220 while transmitting the power signals. For example, the power transmission device 1210 may receive a signal or data including at least one of a control error packet (CEP) indicating notification information on power (or amount of power) that is required by the power reception device 1220 for wireless charging, a received power packet (RPP) indicating size information of power (or amount of power) that the power reception device 1220 receives, an end power transfer (EPT) indicating a wireless charging interruption request of the power reception device 1220, and a point-to-point control (PPP) indicating a data link protocol between the power transmission device 1210 and the power reception device 1220. In an embodiment, the power transmission device 1210 may adjust at least a part of the power signal that is wirelessly transmitted to the power reception device 1220, based on at least one of the CEP and the RPP received from the power reception device 1220.

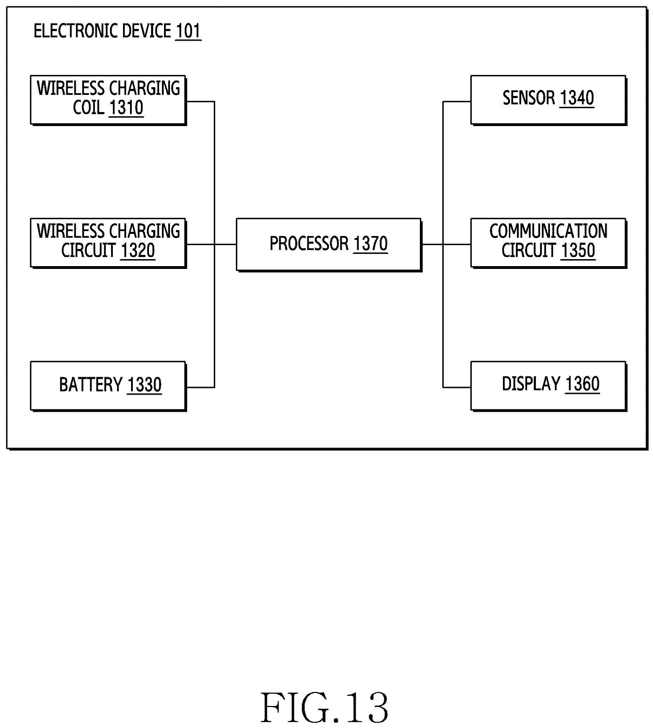

FIG. 13 is a view illustrating components of an electronic device according to an embodiment.

Referring to FIG. 13, the electronic device 101 according to an embodiment may include a wireless charging coil 1310 (for example, the wireless charging coil 710a of FIG. 7 or the wireless charging coil 710b of FIG. 8), a wireless charging circuit 1320, a battery 1330 (for example, the battery 189 of FIG. 1), at least one sensor 1340 (for example, the sensor module 176 of FIG. 1), at least one communication circuit 1350 (for example, the communication module 190 of FIG. 1), a flexible display 1360 (for example, the display module 160 of FIG. 1, the flexible display 330a of FIGS. 3 and/or 4, and/or the flexible display 330b of FIGS. 5 and/or 6), and at least one processor 1370 (for example, the processor 120 of FIG. 1). According to various embodiments, the flexible display 1360 may be referred to as a rollable display and/or a slidable display since the flexible display 1360 is rolled in or out or slides in or out according to a state of the electronic device 101.

In various embodiments, the electronic device 101 may omit at least some of the above-described components, or may further include additional other components. For example, the electronic device 101 may further include a driving module (for example, an actuator and/or a motor) to support sliding (for example, slide-in or slide-out) of a second housing (for example, the second housing 320a of FIGS. 3 and/or 4, or the second housing 320b of FIGS. 5 and/or 6, or the second housing 320 of FIGS. 7 and/or 8) relative to a first housing (for example, the first housing 310a of FIGS. 3 and/or 4, or the first housing 310b of FIGS. 5 and/or 6, or the first housing 310 of FIGS. 7 and/or 8). In addition, for example, the electronic device 101 may further include at least some of the components of the electronic device mentioned through FIG. 1.

In an embodiment, the wireless charging coil 1310 may support wireless charging (for example, transmission of wireless power signals and/or reception of wireless power signals) of the electronic device 101. For example, the wireless charging coil 1310 may wirelessly transmit power signals generated by the wireless charging circuit 1320 to a wireless charging coil of an external electronic device (for example, the external electronic device 1110 of FIG. 11), or may wirelessly receive power signals transmitted from an external electronic device (for example, the external electronic device 910 of FIGS. 9 and/or 10).

In an embodiment, the wireless charging circuit 1320 may generate power signals to transmit to an external electronic device (for example, 1110) by using power supplied from the battery 1330, or may generate power to charge the battery 1330 by using power signals received from an external electronic device (for example, 910). In various embodiments, the wireless charging circuit 1320 may be configured as at least a part of the power management module mentioned through FIGS. 1 and/or 2, or may be configured independently from the power management module.

In an embodiment, the battery 1330 may supply power to the components of the electronic device 101 (for example, discharging), or may be charged based on power signals wiredly or wirelessly received from an external power source (for example, a wall power source, an auxiliary battery device, a laptop computer, a desktop computer, and/or a wireless charging device (for example, 910)).

In an embodiment, the at least one sensor 1340 may detect a state and a posture of the electronic device 101, and may generate signals or data corresponding to the detected state and posture. For example, the at least one sensor 1340 may detect the number of rotations of a driving module (for example, an actuator and/or a motor) that supports sliding of a second housing 320a, 320b, or 320 relative to a first housing 310a, 310b, or 310, and may generate corresponding signals or data. In addition, for example, the at least one sensor 1340 may detect an amount of movement of the second housing 320a, 320b, or 320, and may generate corresponding signals or data. In addition, for example, the at least one sensor 1340 may detect a magnetic field generated in a magnet disposed in a certain region of the second housing 320a, 320b, or 320 or a certain region of the flexible display 1360, and may generate corresponding signals or data. In addition, for example, the at least one sensor 1340 may detect an acceleration and/or gyro of the electronic device 101, and may generate corresponding signals or data.

In an embodiment, the at least one communication circuit 1350 may support wireless communication between the electronic device 101 and at least one external electronic device (for example, 910, 1110, or the external electronic device 920 of FIG. 9). For example, the at least one communication circuit 1350 may support communication of an in-band method to transmit or receive signals or data to or from an external electronic device (for example, 910 or 1110) by using a frequency of a band that is the same as or neighbors the frequency used for transmitting and/or receiving wireless power signals in the wireless charging coil 1310. In addition, for example, the at least one communication circuit 1350 may support communication of an out-band method to transmit or receive signals or data from or to an external electronic device (for example, 910, 920 and/or 1110) by using a frequency of a band that is different from the frequency used for transmitting and/or receiving the wireless power signals. In various embodiments, the communication of the out-band method may include at least one of Bluetooth low energy, Bluetooth, Wi-Fi, Wi-Fi direct, cellular communication, and near field communication (NFC).

In an embodiment, the flexible display 1360 may vary in size (or area) of a screen region (or an active region or a display region) exposed to the outside in response to state transition of the electronic device 101. In addition, the flexible display 1360 may display, through the screen region, a variety of information (for example, information on a charging state of the electronic device 101 and/or information on a charging state of an external electronic device (for example, 920)) related to wireless charging of the electronic device 101 and/or an external electronic device (for example, 920) interlocked with the electronic device 101.

In an embodiment, the at least one processor 1370 may control various functions or operations of the electronic device 101 by executing a code (for example, instructions) of a programming language stored in a memory (for example, the memory 130 of FIG. 1). For example, the at least one processor 1370 may be electrically connected with the components of the electronic device 101 to deliver (or transmit) at least one command, signal, and/or data involved with execution of the functions or operations of the electronic device 101 to a relevant component.

In an embodiment, in the wireless charging operation (for example, transmission of wireless power signals or reception of wireless power signals) of the electronic device 101, the electronic device 101 may identify occurrence of a designated event and at least one function (for example, a sliding function of a second housing 320a, 320b, or 320 and/or a haptic (for example, vibration) output function) that is defined to be executed in response to the occurrence of the designated event. In addition, the electronic device 101 may at least temporarily restrict execution of the at least one identified function while performing wireless charging of the electronic device 101. Operations of the electronic device 100 will be described in embodiments described hereinbelow with reference to the drawings.

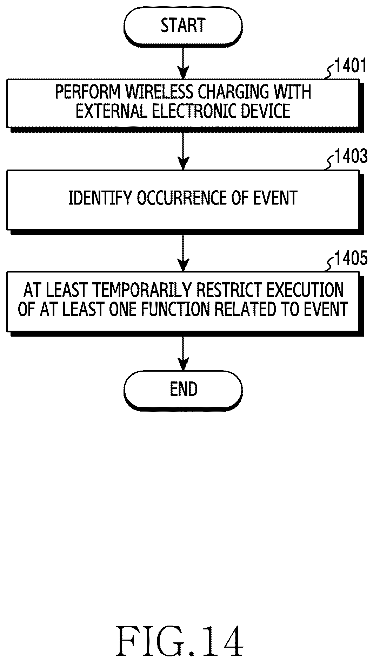

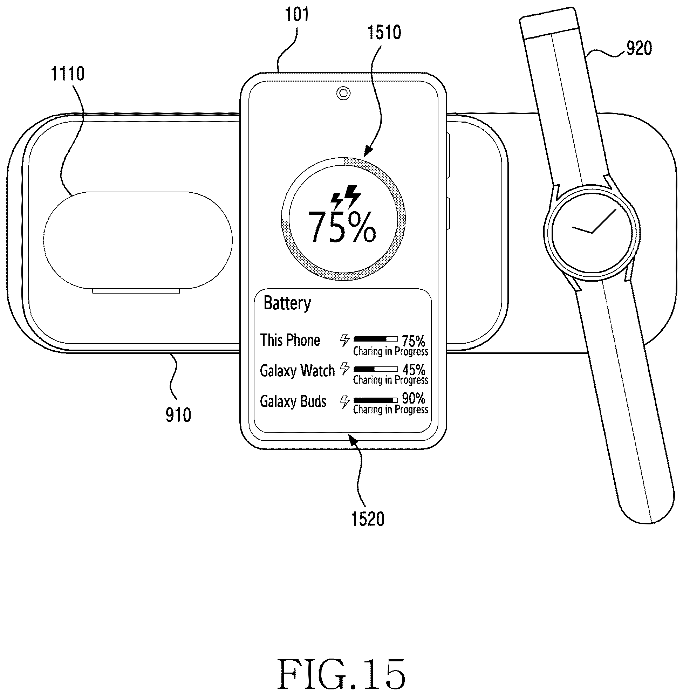

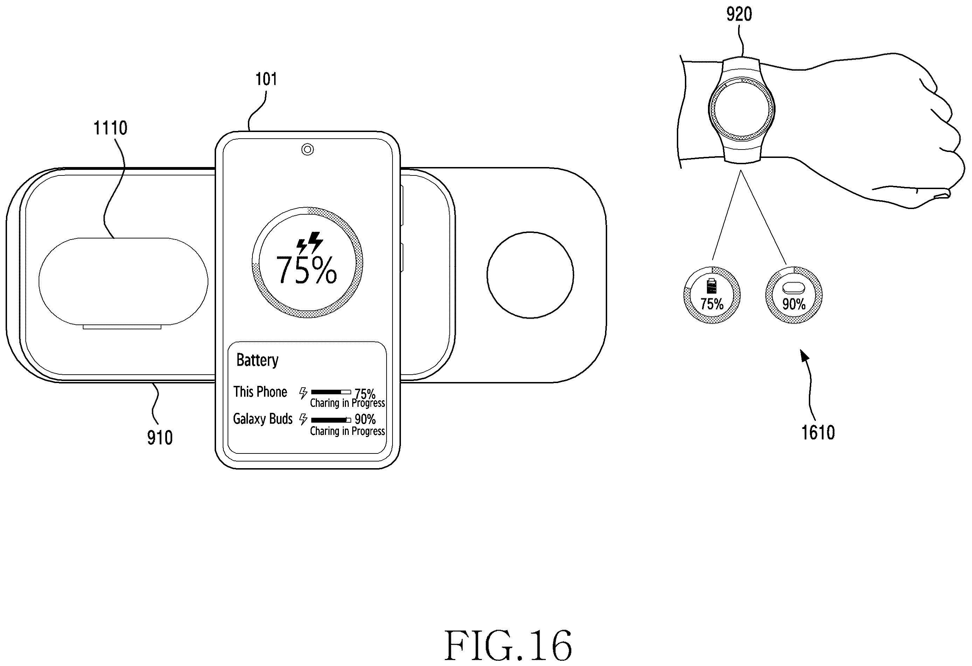

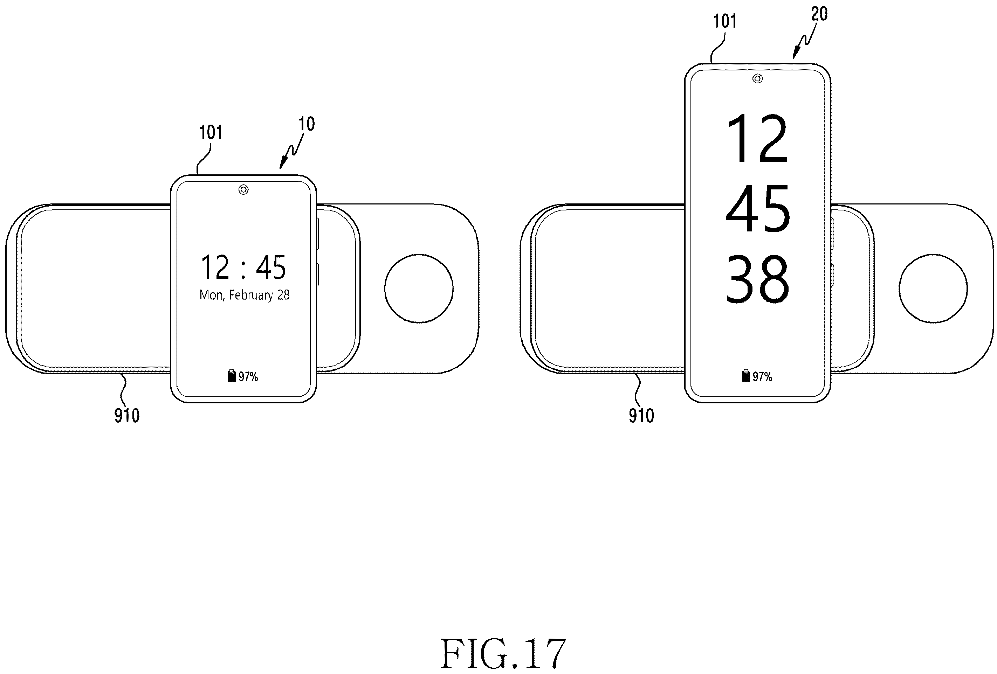

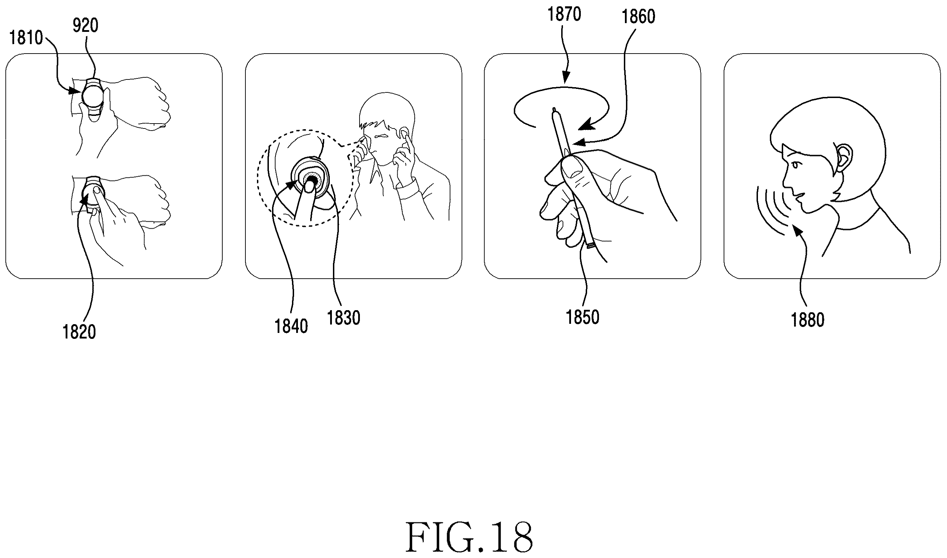

FIG. 14 is a view illustrating an example of an operating method of an electronic device when a wireless charging operation is performed according to an embodiment. FIG. 15 is a view illustrating an example of a user interface of an electronic device when a wireless charging operation is performed according to an embodiment. FIG. 16 is a view illustrating a user interface of an external electronic device which is interlocked with an electronic device when a wireless charging operation is performed according to an embodiment. FIG. 17 is a view illustrating a state of an electronic device when a wireless charging operation is performed according to an embodiment. FIG. 18 is a view illustrating various examples of an event that occurs when a wireless charging operation is performed according to an embodiment.

In explaining the embodiment of FIG. 14, references are made to embodiments of FIGS. 15, 16, 17, and 18. In addition, operations mentioned in the embodiment of FIG. 14 may be performed in sequence, but may not necessarily be performed in sequence. For example, the order of operations mentioned in the embodiment of FIG. 14 may be changed or at least two operations may be performed in parallel.

Referring to FIG. 14, in operation 1401, an electronic device (for example, the electronic device 101 of FIGS. 1, 2, 7, 8, 9 11 and/or 13, the electronic device 101a of FIGS. 3 and/or 4, and/or the electronic device 101b of FIGS. 5 and 6) may perform wireless charging (for example, reception of wireless power signals or transmission of wireless power signals) with an external electronic device (for example, the external electronic device 910 of FIGS. 9 and/or 10, or the external electronic device 1110 of FIG. 11). For example, the electronic device 101 may be disposed on an upper portion of an external electronic device (for example, 910) such that at least a part of a wireless charging coil (for example, the wireless charging coil 710a of FIG. 7 or the wireless charging coil 710b of FIG. 8) is aligned with at least a part of a wireless charging coil (for example, the wireless charging coil 911 of FIG. 10) of the external electronic device (for example, 910), and may wirelessly receive power signals from the external electronic device (for example, 910). In addition, for example, the electronic device 101 may disposed on a lower portion of an external electronic device (for example, 1110) such that at least a part of the wireless charging coil 710a or 710b is aligned with at least a part of a wireless charging coil of the external electronic device (for example, 1110), and may wirelessly transmit power signals to the external electronic device (for example, 1110).

According to an embodiment, the electronic device 101 may display a variety of information using a flexible display (for example, the flexible display 330a of FIGS. 3 and/or 4, the flexible display 330b of FIGS. 5 and/or 6, or the flexible display 1360 of FIG. 13) in the wireless charging operation (for example, reception of wireless power signals) of the electronic device 101. Referring to FIG. 15, for example, the electronic device 101 may display, in a screen region (or an always on display (AOD) interface) of the flexible display 330a, 330b and/or 1360, at least one of a first visual object 1510 indicating charging information of the electronic device 101 and a second visual object 1520 indicating charging information of at least one other external electronic device (for example, 920 and/or 1110) which wirelessly receives power signals from the external electronic device (for example, 910). In this regard, the electronic device 101 may be interlocked with the at least one other external electronic device (for example, 920 and/or 1110) adjacent thereto based on the same account information, and may share the charging information of a corresponding device. In this respect, the charging information of the electronic device 101 and/or the at least one other external electronic device (for example, 1110) which wirelessly receives power signals from the external electronic device (for example, 910) may be shared with at least one other external electronic device (for example, 920) that does not receive power signals from the external electronic device (for example, 910). Referring to FIG. 16, for example, the electronic device 101 and/or the at least one other external electronic device (for example, 1110) that performs wireless charging with the external electronic device (for example, 910) may share charging information of the corresponding device with at least one other external electronic device (for example, 920) that does not perform wireless charging with the external electronic device (for example, 910), and the at least one other external electronic device (for example, 920) may display a visual object 1610 indicating charging information of the electronic device 101 and/or the at least one other external electronic device (for example, 1110) which is interlocked based on the same account information by using a display.

In an embodiment, in the wireless charging operation (for example, transmission of wireless power signals or reception of wireless power signals) of the electronic device 101, the electronic device 101 may identify a state of the electronic device 101. For example, referring to FIG. 17, the electronic device 101 may acquire (or receive), from at least one sensor (for example, the at least one sensor 1340 of FIG. 13), a signal or data indicating a change in the number of rotations of a driving module (for example, an actuator and/or a motor) supporting sliding (for example, slide-in or slide-out) of a second housing (for example, the second housing 320a of FIGS. 3 and/or 4, or the second housing 320b of FIGS. 5 and/or 6, or the second housing 320 of FIGS. 7 and/or 8), the amount of movement of the second housing 320a, 320b, or 320, and/or the magnetic field generated in a magnet disposed in a certain region of the flexible display 1360. The electronic device 101 may identify whether the electronic device 101 disposed above the external electronic device 920 or under the external electronic device (for example, the external electronic device 1110) has the first state 10 (for example, the third state 30 of FIG. 5) or the second state 20 (or the fourth state 40 of FIG. 6), based on the signal or data.

In operation 1403, the electronic device 101 according to an embodiment may identify occurrence of a designated event. For example, the electronic device 101 may identify occurrence of an event including at least one of call reception and/or video call reception based on a call application, short message service (SMS) message reception and/or pop-up message reception based on a message application, social network service (SNS) message reception based on a social media application, alarm output based on an alarm application, wired and/or wireless communication connection with an external electronic device, and execution of a designated application (for example, an application designated by a user besides the above-described applications). For example, referring to FIG. 18, the electronic device 101 may identify occurrence of an event including at least one of a user input 1810 on a wheel key of an external electronic device (for example, 920) interlocked with the electronic device 101, a user input 1820, 1840, and/or 1860 on a button and/or a user interface of the interlocked external electronic device (for example, 920, 1830, and/or 1850), a designated gesture input using the interlocked external electronic device (for example, 1850), and a voice input 1880 uttering a designated keyword.

In an embodiment, based on identifying the occurrence of the event, the electronic device 101 may identify at least one function of the electronic device 101 that is defined to be executed in response to the occurrence of the event according to a routine set on a framework of the electronic device 101. According to an embodiment, the at least one function may be related with (or associated with) a physical movement and/or position displacement of the electronic device 101, and for example, may include at least one of a sliding function of a second housing 320a, 320b, or 320 relative to a first housing (for example, the first housing 310a of FIGS. 3 and/or 4, or the first housing 310b of FIGS. 5 and/or 6, or the first housing 310 of FIGS. 7 and/or 8), and a haptic (for example, vibration) output function of the electronic device 101.

In operation 1405, the electronic device 101 according to an embodiment may at least temporarily restrict execution of the at least one identified function. For example, the electronic device 101 may determine a posture (for example, a first posture which is substantially parallel to the ground or a second posture which has a slope of a designated angle or more with the ground) of the electronic device 101, based on at least one of an acceleration value and a gyro value of the electronic device 101 which is acquired (or received) from at least one sensor 1340, and may restrict the execution of the at least one function while maintaining the wireless charging of the electronic device 101 (for example, maintaining the first posture), based on the determination. In addition, for example, the electronic device 101 may acquire (or receive) state information (for example, charging state information and/or discharging state information) of a battery (for example, the battery 1330 of FIG. 13) from a fuel gauge (for example, the power gauge 230 of FIG. 2) of the electronic device 101, and may restrict the execution of the at least one function while maintaining the wireless charging of the electronic device 101, based on the state information of the battery 1330. In addition, for example, the electronic device 101 may acquire (or receive) in-band communication state information of the electronic device 101 from at least one communication circuit (for example, the at least one communication circuit 1350 of FIG. 13), and may restrict the execution of the at least one function while maintaining the wireless charging of the electronic device 101 based on the in-band communication state information. In addition, for example, the electronic device 101 may monitor whether a signal or data including at least one of a control error packet (CEP) and/or a received power packet (RPP) is received from an external electronic device (for example, 1110) performing wireless charging with the electronic device 101, and may restrict the execution of the at least one function while maintaining the wireless charging of the electronic device 101, based on the monitoring.

According to various embodiments, the electronic device 101 may switch or maintain a state of the electronic device 101 while waiting for (or preparing) wireless charging with an external electronic device 910 or 1110. For example, the electronic device 101 may have the second state 20 (or the fourth state 40) and may be disposed on or under the external electronic device 910 or 1110, and in this case, may switch from the second state 20 (or the fourth state 40) to the first state 10 (or the third state 30) while waiting for the wireless charging. Based on this, the electronic device 101 may perform wireless charging with the external electronic device 910 or 1110 in the switched first state 10 (or the third state 30), and may maintain the first state 10 (or the third state 30) by at least temporarily restricting a function corresponding to a designated event (for example, the sliding function of the second housing 320a, 320b, or 320 relative to the first housing 310a, 310b, or 310) while performing the wireless charging. In addition, for example, the electronic device 101 may have the second state 20 (or the fourth state 40) and may be disposed on or under the external electronic device 910 or 1110, and may maintain the second state 20 (or the fourth state 40) while waiting for the wireless charging. Based on this, the electronic device 101 may perform wireless charging with the external electronic device 910 or 1110 in the second state 20 (or the fourth state 40) maintained, and may maintain the second state 20 (or the fourth state 40) by at least temporarily restricting a function corresponding to a designated event (for example, the sliding function of the second housing 320a, 320b, or 320 relative to the first housing 310a, 310b, or 310) while performing the wireless charging.

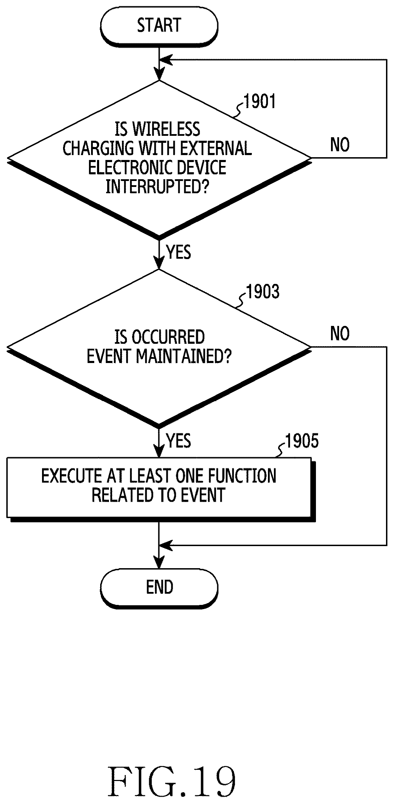

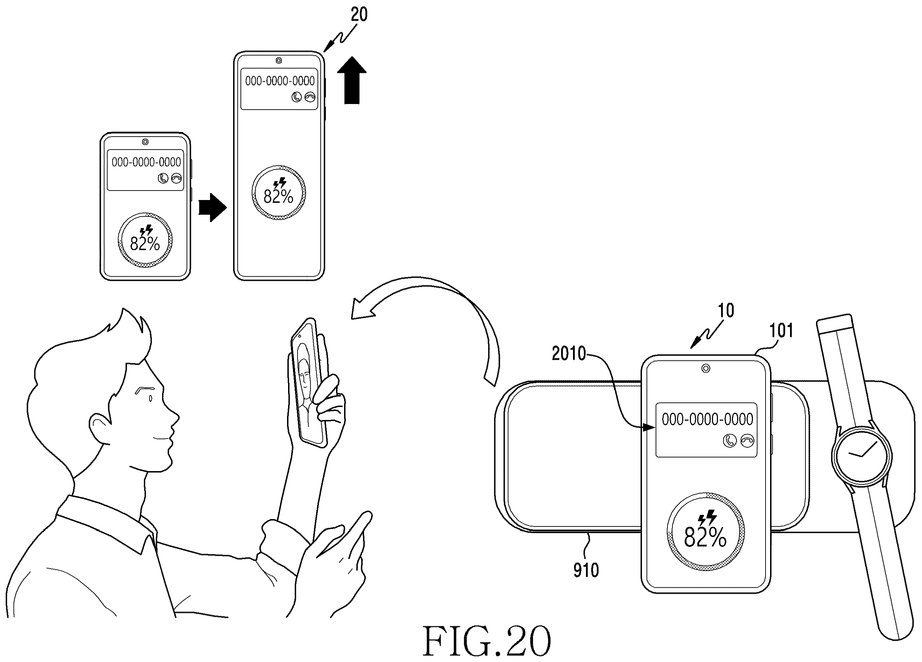

FIG. 19 is a view illustrating an operating method of an electronic device when wireless charging is interrupted according to an embodiment. FIG. 20 is a view illustrating execution of a function of an electronic device when wireless charging is interrupted according to an embodiment.

In explaining the embodiment of FIG. 19, references are made to the embodiment of FIG. 20. In addition, operations mentioned in the embodiment of FIG. 19 may be performed in sequence, but may not necessarily be performed in sequence. For example, the order of operations mentioned in the embodiment of FIG. 19 may be changed or at least two operations may be performed in parallel. In addition, the operations mentioned in the embodiment of FIG. 19 may be performed after the operations mentioned in the embodiment of FIG. 14 are performed.

Referring to FIGS. 19 and 20, in operation 1901, the electronic device 101 according to an embodiment may determine whether wireless charging between the electronic device 101 and an external electronic device (for example, 910 or the external electronic device 1110 of FIG. 11) is interrupted. For example, the electronic device 101 may determine a posture of the electronic device 101 (for example, a first posture which is substantially parallel to the ground or a second posture which has a slope of a designated angle or more with the ground), based on at least one of an acceleration value and a gyro value of the electronic device 101 which is acquired from at least one sensor (for example, the at least one sensor 1340 of FIG. 13), and may determine whether the wireless charging of the electronic device 101 is interrupted (for example, whether the posture changes from the first posture to the second posture) based on the determination. In addition, for example, the electronic device 101 may acquire (or receive) state information (for example, charging state information and/or discharging state information) of a battery (for example, the battery 1330 of FIG. 13) from a fuel gauge (for example, the power gauge 230 of FIG. 2) of the electronic device 101, and may determine whether the wireless charging of the electronic device 101 is interrupted based on the state information of the battery 1330. In addition, for example, the electronic device 101 may acquire (or receive) in-band communication state information of the electronic device 101 from at least one communication circuit (for example, the at least one communication circuit 1350 of FIG. 13), and may determine whether the wireless charging of the electronic device 101 is interrupted based on the in-band communication state information. In addition, for example, the electronic device 101 may monitor whether a signal or data including at least one of a control error packet (CEP) and/or a received power packet (RPP) is received from an external electronic device (for example, 1110) performing wireless charging with the electronic device 101, and may determine whether the wireless charging of the electronic device 101 is interrupted based on the monitoring.

According to an embodiment, based on determining that the wireless charging of the electronic device 101 is interrupted, the electronic device 101 may determine whether the occurrence of an identified event is maintained in operation 1903. For example, the electronic device 101 may determine whether the event (for example, the event identified in operation 1403 of FIG. 14) occurring while performing wireless charging (for example, transmission of wireless power signals or reception of wireless power signals) is maintained even at the time of determining the interruption of the wireless charging of the electronic device 101. For example, an event 2010 (for example, call reception or video call reception) that occurs in the operation of the electronic device 101 performing wireless charging (for example, reception of wireless power signals) with the external electronic device (for example, 910) may be maintained for a predetermined time even when the wireless charging of the electronic device 101 is interrupted in response to the electronic device 101 gripped by a user (or even when the electronic device 101 deviates from a wireless charging region of the external electronic device (for example, 910)).

According to an embodiment, based on determining that the occurrence of the event 2010 is maintained at the time of determining the interruption of the wireless charging of the electronic device 101. the electronic device 101 may execute at least one function (for example, at least one function identified in operation 1403 of FIG. 14) identified in relation with the event 2010 in operation 1905. For example, the electronic device 101 may execute at least one function (for example, sliding of a second housing (for example, the second housing 320a of FIGS. 3 and/or 4, or the second housing 320b of FIGS. 5 and/or 6, or the second housing 320 of FIGS. 7 and/or 8) (for example, slide-in or slide-out)) to change the state of the electronic device 101 (for example, the first state 10) (for example, the state of the electronic device 101 identified in operation 1401 of FIG. 14) identified while the electronic device 101 is performing wireless charging with the external electronic device (for example, 910 or 1110), and the state of the electronic device 101 may be switched from the state while the wireless charging is performed (for example, the first state 10) to another state (for example, the second state 20).

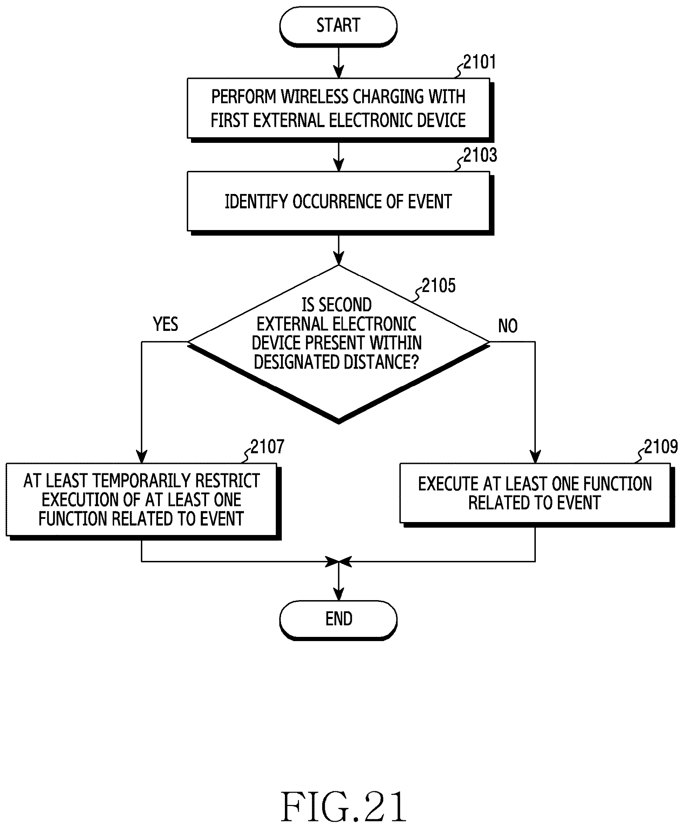

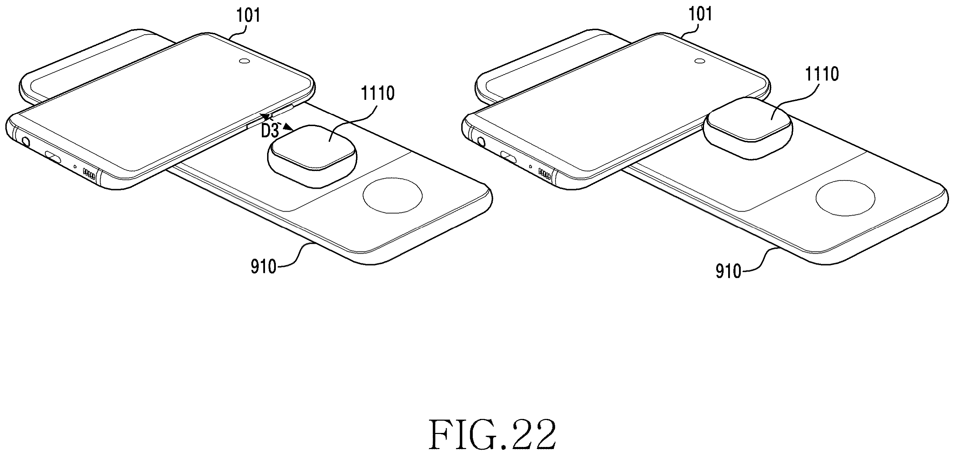

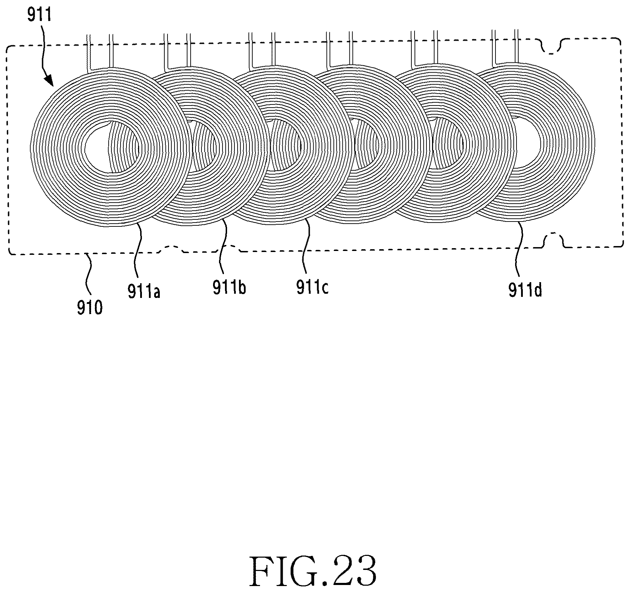

FIG. 21 is a view illustrating another example of an operating method of an electronic device when a wireless charging operation is performed according to an embodiment. FIG. 22 is a view illustrating arrangement states of an electronic device and an external electronic device when a wireless charging operation is performed according to an embodiment. FIG. 23 is a view illustrating a wireless charging coil of a power transmission device according to an embodiment.

In explaining the embodiment of FIG. 21, references are made to embodiments of FIGS. 22 and 23. In addition, operations mentioned in the embodiment of FIG. 21 may be performed in sequence, but may not necessarily be performed in sequence. For example, the order of operations mentioned in the embodiment of FIG. 21 may be changed or at least two operations may be performed in parallel.

Referring to FIGS. 21, 22 and 23, in operation 2101, the electronic device 101 according to an embodiment may perform wireless charging (for example, reception of wireless power signals) with an external electronic device (for example, 910). For example, the electronic device 101 may be disposed on the external electronic device (for example, 910), such that at least a part of a wireless charging coil (for example, the wireless charging coil 710a of FIG. 7 or the wireless charging coil 710b of FIG. 8) is aligned with at least a part of a wireless charging coil 911 of the external electronic device (for example, 910), and may wirelessly receive power signals from the external electronic device (for example, 910).

In operation 2103, the electronic device 101 according to an embodiment may identify occurrence of a designated event. For example, the electronic device 101 may identify occurrence of an event including at least one of call reception, video call reception, short message service (SMS) message reception, social network service (SNS) message reception, pop-up message reception, alarm output, wired and/or wireless communication connection with an external electronic device, execution of a designated application, occurrence of an event including at least one of a user input on a wheel key of an external electronic device (for example, the external electronic device 920 of FIG. 18) interlocked with the electronic device 101, a user input on a button and/or a user interface of an external electronic device (for example, 920, the external electronic device 1830 of FIG. 18 and/or the external electronic device 1850 of FIG. 18) interlocked with the electronic device 101, a designated gesture input using the external electronic device 1850 interlocked with the electronic device 101, and a voice input uttering a designated keyword.

In operation 2105, the electronic device 101 according to an embodiment may determine whether another external electronic device (for example, 1110) which is disposed on the external electronic device (for example, 910) to wirelessly receive power signals from the external electronic device (for example, 910) is present within a designated third distance d3 from the electronic device 101. In this regard, the external electronic device (for example, 910) may identify respective positions of the electronic device 101 and the other external electronic device (for example, 1110) for a wireless charging region (for example, the first region 70 of FIGS. 9 and/or 10) of the external electronic device (for example, 910), based on a response signal to a ping signal that is received from the electronic device 101 and the other external electronic device (for example, 1110) while performing ping operations (for example, the ping operation 1211 of FIG. 12) with the electronic device 101 and the other external electronic device (for example, 1110). In addition, the external electronic device (for example, 910) may determine at least one wireless charging coil to control to be in the active state to transmit wireless power signals, based on the respective positions of the electronic device 101 and the other external electronic device (for example, 1110) identified. For example, based on the electronic device 101 being positioned at a first position on the wireless charging region 70 of the external electronic device (for example, 910), the external electronic device (for example, 910) may control at least one wireless charging coil (for example, 911a and/or 911b) corresponding to the first position (or overlapping the first position at least in part) to be in the active state.

In an embodiment, the electronic device 101 may receive information on the at least one wireless charging coil (for example, 911a and/or 911b) that is controlled to be in the active state in response to the position of the electronic device 101 from the external electronic device (for example, 910), by using in-band communication and/or out-band communication with the external electronic device (for example, 910). In addition, the electronic device 101 may receive information on the at least one wireless charging coil (for example, 911c or 911d) that is controlled to be in the active state in response to the position of the other external electronic device (for example, 1110) from the external electronic device (for example, 910), by using in-band communication and/or out-band communication with the external electronic device (for example, 910).

In operation 2107, based on identifying that the other external electronic device (for example, 1110) is present within the designated third distance d3 from the electronic device 101, the electronic device 101 according to an embodiment may at least temporarily restrict execution of at least one function of the electronic device 101 that is defined to be executed according to occurrence of the identified event. In this regard, based on the information of the wireless charging coil received from the external electronic device (for example, 910), the electronic device 101 may identify that the at least one wireless charging coil (for example, 911c) that is controlled to be in the active state according to the position of the other external electronic device (for example, 1110) is adjacent to (overlaps) at least one wireless charging coil (for example, 911a and/or 911b) that is controlled to be in the active state according to the position of the electronic device 101, and based on this, may determine that the other external electronic device (for example, 1110) is present within the designated third distance d3 from the electronic device 101.

In operation 2109, based on identifying that the other external electronic device (for example, 1110) is not present within the designated third distance d3 from the electronic device 101, the electronic device 101 according to an embodiment may execute at least one function of the electronic device 101 that is defined to be executed according to the occurrence of the identified event. In this regard, based on information of the wireless charging coil that is received from the external electronic device (for example, 910), the electronic device 101 may identify that at least one wireless charging coil (for example, 911d) that is controlled to be in the active state according to the position of the other external electronic device (for example, 1110) is not adjacent to (or does not overlap) at least one wireless charging coil (for example, 911a and/or 911b) that is controlled to be in the active state according to the position of the electronic device 101, and based on this, may determine that the other external electronic device (for example, 1110) is not present within the designated third distance d3 from the electronic device 101.

According to various embodiments, the electronic device 101 may determine a relative angle between the electronic device 101 and another external electronic device (for example, 1110) to at least temporarily restrict execution of the at least one function. For example, the electronic device 101 may acquire data of an angle of arrival for an RF signal received from the other external electronic device (for example, 1110) by using a plurality of antennas (for example, the antenna module 197 of FIG. 1) of the electronic device 101 supporting ultra-wideband communication, and may calculate a relative angle between the electronic device 101 and the other external electronic device (for example, 1110) based on the data of the angle of arrival. In an embodiment, the electronic device 101 may identify that a direction that the electronic device 101 faces and a direction that the other external electronic device (for example, 1110) faces intersect each other by a designated angle or more, based on the calculated relative angle, and based on this, may determine to at least temporarily restrict execution of the at least one function. In addition, for example, the electronic device 101 may identify that the direction that the electronic device 101 faces and the direction that the other external electronic device (for example, 1110) faces intersect each other by the designated angle or more, based on angle (or direction) information of the electronic device 101 which is acquired from at least one sensor (for example, the at least one sensor 1340 of FIG. 13) of the electronic device 101, and angle (or direction) information of the other external electronic device (for example, 1110) which is acquired through Bluetooth low energy communication with the other external electronic device (for example, 1110), and based on this, may determine to at least temporarily restrict execution of the at least one function.

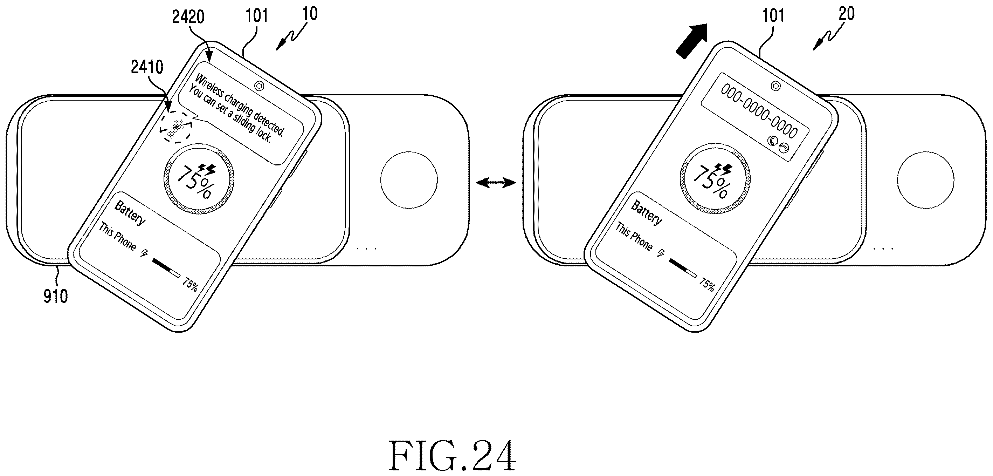

FIG. 24 is a view illustrating another example of a user interface of an electronic device when a wireless charging operation is performed according to an embodiment.

Referring to FIG. 24, the electronic device 101 according to an embodiment may display at least one visual object related to execution of at least one function of the electronic device 101 in a screen region (or an AOD interface) of a flexible display (for example, the flexible display 330a of FIGS. 3 and/or 4, the flexible display 330b of FIGS. 5 and/or 6, and/or the flexible display 1360 of FIG. 13), based on detecting wireless charging with an external electronic device 910. For example, the electronic device 101 may display, in the screen region of the flexible display 330a, 330b, or 1360, a first visual object 2420 (for example, a text) guiding that a wireless charging operation (or a wireless charging function) of the electronic device 101 is being executed, and that it is possible to dynamically restrict execution of at least one function (for example, a sliding function) while executing the wireless charging. In addition, for example, the electronic device 101 may display, in the screen region of the flexible display 330a, 330b, or 1360, a second visual object 2410 (for example, an icon and/or a symbol) for receiving a user input to control whether to execute at least one function (for example, a sliding function) of the electronic device 101. According to an embodiment, based on receiving a user input on the second visual object 2410, the electronic device 101 may at least temporarily restrict the function (for example, the sliding function) corresponding to the designated event (for example, call reception and/or video call reception) even when the designated event occurs while performing wireless charging, so that the state of the electronic device 101 (for example, the first state 10 (or the third state 30 of FIG. 5)) may be maintained. According to another embodiment, based on not receiving the user input on the second visual object 2410, the electronic device 101 may execute the related function (for example, the sliding function) in response to the occurrence of the designated event (for example, call reception and/or video call reception) while performing wireless charging, so that the state of the electronic device 101 may be changed (for example, from the first state 10 (or the third state 30) to the second state 20 (or the fourth state 40 of FIG. 6).

Although not shown in the drawings, the electronic device 101 according to various embodiments may provide at least one of the first visual object 2420 and the second visual object 2410 in an environment where the electronic device 101 performs wireless charging (for example, wireless power reception or wireless power transmission) with another external electronic device in addition to the external electronic device 910 supporting multi wireless charging.

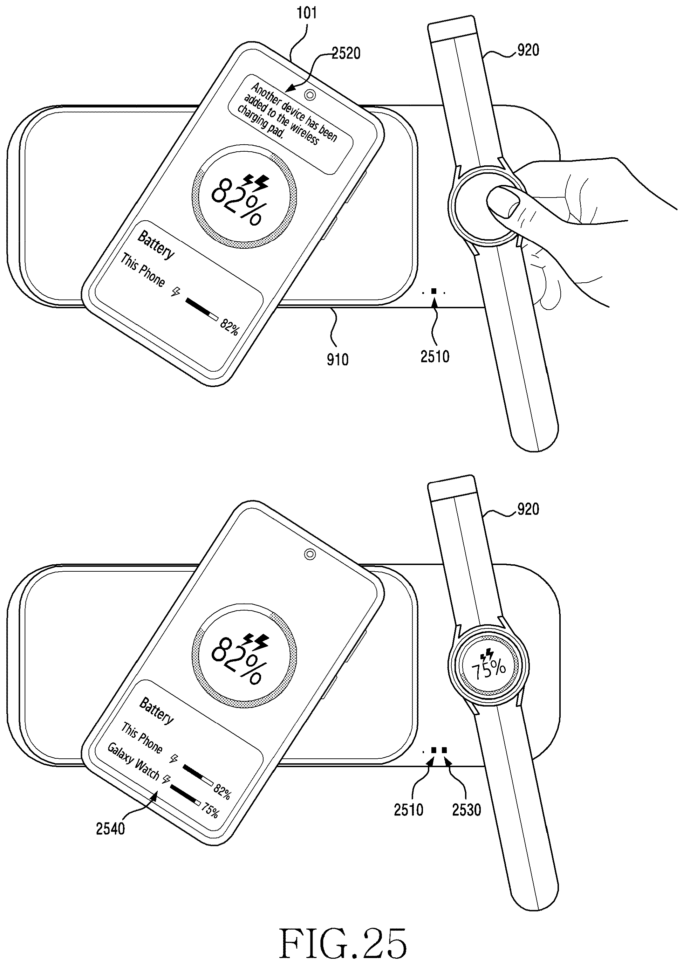

FIG. 25 is a view illustrating still another example of a user interface of an electronic device when a wireless charging operation is performed according to an embodiment.

Referring to FIG. 25, an external electronic device 910 (for example, a power transmission device) supporting wireless charging according to an embodiment may display a first indicator 2510 corresponding to a wireless charging region where the electronic device 101 is disposed among a plurality of indicators provided through the front surface of the external electronic device 910, by using a visual effect (for example, a different color and/or blinking) which is distinguished from other indicators, based on detecting that the electronic device 101 (for example, a power reception device) is disposed on the front surface of the external electronic device 910 (or detecting that wires charging with the electronic device 101 is initiated). Similarly, while performing wireless charging with the electronic device 101, the external electronic device 910 may display the first indicator 2510 and a second indicator 2530 corresponding to a wireless charging region where another external electronic device 920 is disposed by using the visual effect, based on detecting that the other external electronic device 920 (for example, a power reception device) is disposed on the front surface of the external electronic device 910 (or detecting that wireless charging with the other external electronic device 920 is initiated).

According to an embodiment, while performing wireless charging with the electronic device 101 disposed on the front surface of the external electronic device 910, the external electronic device 910 may share information on the other external electronic device 920 with the electronic device 101, based on detecting that the other external electronic device 920 is disposed on the front surface of the external electronic device 910 (or detecting that wireless charging with the other external electronic device 920 is initiated). Based on this, the electronic device 101 may display at least one of a first visual object 2520 (for example, a text) indicating the presence of the other external electronic device 920 on the external electronic device 910 and a second visual object 2540 indicating charging information of the other external electronic device 920 in a screen region (or an AOD interface) of a flexible display (for example, the flexible display 330a of FIGS. 3 and/or 4, the flexible display 330b of FIGS. 5 and/or 6, and/or the flexible display 1360 of FIG. 13).

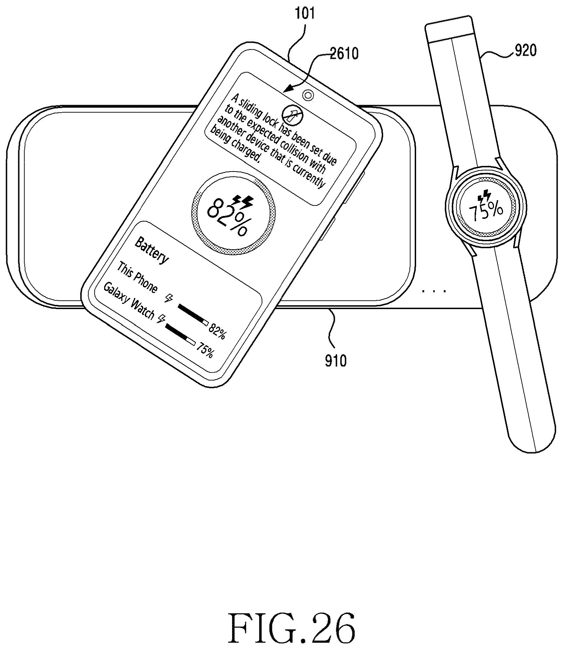

FIG. 26 is a view illustrating yet another example of a user interface of an electronic device when a wireless charging operation is performed according to an embodiment.

Referring to FIG. 26, while performing wireless charging with an external electronic device 910 with another external electronic device 920 disposed on the external electronic device 910, an electronic device 101 according to an embodiment may provide a visual object 2610 (for example, a text) indicating that at least one function of the electronic device 101 is at least temporarily restricted. For example, the electronic device 101 may display a visual object indicating that execution of the at least one function corresponding to occurrence of an event is automatically restricted to prevent interference (or collision) between the electronic device 101 and the other external electronic device 920 in a screen region (or an AOD interface) of a flexible display (for example, the flexible display 330a of FIGS. 3 and/or 4, the flexible display 330b of FIGS. 5 and/or 6, and/or the flexible display 1360 of FIG. 13). In addition, for example, based on identifying that a user input on a visual object (for example, the visual object 2410 of FIG. 24) related with control of the at least one function is received, the electronic device may display a visual object indicating that execution of at least one function corresponding to the occurrence of the event is manually restricted.

An electronic device according to embodiments of the disclosure may include: a housing including a first housing and a second housing which is coupled to the first housing to be slidable relative to the first housing; a wireless charging coil disposed in a certain region of the housing; at least one processor; and a memory configured to store instructions.

According to embodiments of the disclosure, the instructions, when executed by the at least one processor, may cause the electronic device to: perform wireless charging with an external electronic device by using the wireless charging coil; identify occurrence of a designated event while performing the wireless charging; and, based on identifying the occurrence of the designated event, at least temporarily restrict execution of at least one function that is defined to be executed in response to the occurrence of the designated event while performing the wireless charging.

According to embodiments of the disclosure, the at least one function may be related with a movement of at least a part of the electronic device.

According to embodiments of the disclosure, the electronic device may be disposed on an upper portion of the external electronic device as at least a part of wireless charging with the external electronic device, such that at least a part of the wireless charging coil is aligned with at least a part of a wireless charging coil of the external electronic device.

According to embodiments of the disclosure, the at least one processor may be configured to wirelessly receive power signals from the external electronic device using the wireless charging coil.

According to embodiments of the disclosure, the electronic device may be disposed on a lower portion of the external electronic device as at least a part of wireless charging with the external electronic device, such that at least a part of the wireless charging coil is aligned with at least a part of a wireless charging coil of the external electronic device.

According to embodiments of the disclosure, the at least one processor may be configured to wirelessly transmit power signals to the external electronic device using the wireless charging coil.

According to embodiments of the disclosure, the instructions, when executed by the at least one processor, may cause the electronic device to identify the occurrence of the event including at least one of call reception, message reception, alarm output, communication connection of the electronic device, execution of a designated application, a user input on at least one of a key, a button, and a user interface of at least one external electronic device interlocked with the electronic device, a designated gesture input using at least one external electronic device interlocked with the electronic device, and a voice input uttering a designated keyword.

According to embodiments of the disclosure, the instructions, when executed by the at least one processor, may cause the electronic device to identify at least one of a sliding function of the second housing relative to the first housing and a vibration output function of the electronic device as the at least one function that is defined to be executed in response to the occurrence of the designated event.

According to embodiments of the disclosure, the electronic device may further include at least one sensor, a battery, and a wireless communication circuit.

According to embodiments of the disclosure, the instructions, when executed by the at least one processor, may cause the electronic device to identify whether the performance of the wireless charging of the electronic device is maintained, based on at least one of posture information of the electronic device that is identified by using the at least one sensor, state information of the battery that is identified by using the at least one sensor, in-band communication state information between the electronic device and the external electronic device that is identified by using the wireless communication circuit or the wireless charging coil, and monitoring information on whether a signal including at least one of a control error packet (CEP) and a received power packet (RPP) is received from the external electronic device by using the wireless communication circuit.

According to embodiments of the disclosure, the instructions, when executed by the at least one processor, may cause the electronic device to: based on at least one of the posture information of the electronic device, the state information of the battery, the in-band communication state information, and the monitoring information, determine whether the wireless charging with the external electronic device is interrupted; based on determining that the wireless charging with the external electronic device is interrupted, determine whether the occurrence of the event is maintained; and, based on determining that the occurrence of the event is maintained, execute the at least one function that is at least temporarily restricted.

According to embodiments of the disclosure, the instructions, when executed by the at least one processor, may cause the electronic device to execute the at least one function that is at least temporarily restricted, based on determining that the occurrence of the event is maintained at a time when the wireless charging with the external electronic device is interrupted.

According to embodiments of the disclosure, the instructions, when executed by the at least one processor, may cause the electronic device to: determine whether another external electronic device is present within a designated distance from the electronic device; and, further based on determining that the other external electronic device is present within the designated distance from the electronic device, at least temporarily restrict execution of the at least one function while performing the wireless charging.

According to embodiments of the disclosure, the instructions, when executed by the at least one processor, may cause the electronic device to: receive information on an activation state of a wireless charging coil of the external electronic device from the external electronic device; and, based on the information on the activation state of the wireless charging coil of the external electronic device, determine whether the other external electronic device is present within the designated distance from the electronic device.

A wireless charging method of an electronic device including a first housing and a second housing which is coupled to the first housing to be slidable relative to the first housing according to embodiments of the disclosure may include: performing wireless charging with an external electronic device by using a wireless charging coil of the electronic device; identifying occurrence of a designated event while performing the wireless charging; and, based on identifying the occurrence of the designated event, at least temporarily restricting execution of at least one function that is defined to be executed in response to the occurrence of the designated event while performing the wireless charging.

According to embodiments of the disclosure, the at least one function may be related with a movement of at least a part of the electronic device.

According to embodiments of the disclosure, performing the wireless charging with the external electronic device may include: placing the electronic device on an upper portion of the external electronic device, such that at least a part of the wireless charging coil is aligned with at least a part of a wireless charging coil of the external electronic device; and wirelessly receiving power signals from the external electronic device using the wireless charging coil.

According to embodiments of the disclosure, performing the wireless charging with the external electronic device may include: placing the electronic device on a lower portion of the external electronic device, such that at least a part of the wireless charging coil is aligned with at least a part of a wireless charging coil of the external electronic device; and wirelessly transmitting power signals to the external electronic device using the wireless charging coil.

According to embodiments of the disclosure, identifying the occurrence of the designated event may include identifying the occurrence of the event including at least one of call reception, message reception, alarm output, communication connection of the electronic device, execution of a designated application, a user input on at least one of a key, a button, and a user interface of at least one external electronic device interlocked with the electronic device, a designated gesture input using at least one external electronic device interlocked with the electronic device, and a voice input uttering a designated keyword.

According to embodiments of the disclosure, identifying the occurrence of the designated event may include identifying at least one of a sliding function of the second housing relative to the first housing and a vibration output function of the electronic device as the at least one function that is defined to be executed in response to the occurrence of the designated event.

According to embodiments of the disclosure, at least temporarily restricting the execution of the at least one function while performing the wireless charging may include identifying whether the performance of the wireless charging of the electronic device is maintained, based on at least one of posture information of the electronic device that is identified by using at least one sensor, state information of a battery of the electronic device that is identified by using the at least one sensor, in-band communication state information between the electronic device and the external electronic device that is identified by using a wireless communication circuit of the electronic device, and monitoring information on whether a signal including at least one of a control error packet (CEP) and a received power packet (RPP) is received from the external electronic device by using the wireless communication circuit.

According to embodiments of the disclosure, at least temporarily restricting the execution of the at least one function while performing the wireless charging may include: based on at least one of the posture information of the electronic device, the state information of the battery, the in-band communication state information, and the monitoring information, determining whether the wireless charging with the external electronic device is interrupted; based on determining that the wireless charging with the external electronic device is interrupted, determining whether the occurrence of the event is maintained; and, based on determining that the occurrence of the event is maintained, executing the at least one function that is at least temporarily restricted.

According to embodiments of the disclosure, at least temporarily restricting the execution of the at least one function while performing the wireless charging may include executing the at least one function that is at least temporarily restricted, based on determining that the occurrence of the event is maintained at a time when the wireless charging with the external electronic device is interrupted.

According to embodiments, the wireless charging method may further include: determining whether another external electronic device is present within a designated distance from the electronic device on an upper portion of the external electronic device; and, further based on determining that the other external electronic device is present within the designated distance from the electronic device, at least temporarily restricting execution of the at least one function while performing the wireless charging.

According to embodiments of the disclosure, determining whether the other external electronic device is present within the designated distance from the electronic device may include: receiving information on an activation state of a wireless charging coil of the external electronic device from the external electronic device; and, based on the information on the activation state of the wireless charging coil of the external electronic device, determining whether the other external electronic device is present within the designated distance from the electronic device.

In a computer readable non-transitory storage medium having a computer program recorded thereon to execute a wireless charging method of an electronic device, including a first housing and a second housing which is coupled to the first housing to be slidable relative to the first housing according to embodiments of the disclosure, the computer program may execute the operations of: performing wireless charging with an external electronic device by using a wireless charging coil of the electronic device; identifying occurrence of a designated event while performing the wireless charging; and, based on identifying the occurrence of the designated event, at least temporarily restricting execution of at least one function that is defined to be executed in response to the occurrence of the designated event while performing the wireless charging.

According to embodiments of the disclosure, the at least one function may be related with a movement of at least a part of the electronic device.

According to embodiments of the disclosure, there may be provided a wireless charging mechanism that supports stable wireless charging of an electronic device by at least temporarily restricting execution of at least one function associated with a physical movement and/or position displacement of the electronic device in the wireless charging (for example, transmission of wireless power signals or reception of wireless power signals) of the electronic device.

The effect achieved by the disclosure is not limited to those mentioned above, and other effects that are not mentioned above may be clearly understood to those skilled in the art based on various embodiments of the disclosure.

In the disclosure, the function or the operation that the electronic device performs may be performed by one or more processors executing one or more instructions stored in a memory. The function or operation of the electronic device mentioned in the disclosure may be performed by one processor executing one or more instructions, or may be performed by a combination of a plurality of processors executing one or more instructions. It may be understood that the processor mentioned in the disclosure includes a circuit for performing computation or controlling other components of the electronic device. For example, the one or more processors may include a central processing unit (CPU), a microprocessor unit (MPU), an application processor (AP), a communication processor (CP), a neural processing unit (NPU), a system on chip (SoC), or an integrated circuit (IC) which is configured to execute one or more instructions. The one or more processors may be configured to perform the operation of the electronic device described above.

In the disclosure, the program (for example, a software module or software) may be stored in a random access memory, and/or a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. The memory may be configured by one storage medium or a combination of a plurality of storage media. The at least one instruction may be stored in one storage medium or may be distributed and stored in the plurality of storage media.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing comprising a first housing and a second housing which is coupled to the first housing to be slidable relative to the first housing;
a wireless charging coil disposed in a region of the housing;
at least one processor; and
memory storing instructions,
wherein the instructions, when executed by the at least one processor, cause the electronic device to:
perform wireless charging with an external electronic device by using the wireless charging coil;
identify occurrence of a designated event while performing the wireless charging; and
based on identifying the occurrence of the designated event, at least temporarily restrict, while performing the wireless charging, execution of at least one function defined to be executed in response to the occurrence of the designated event,
wherein the at least one function is related with a movement of at least a part of the electronic device.

2. The electronic device of claim 1, wherein the instructions, when executed by the at least one processor, cause the electronic device to identify the occurrence of the event comprising at least one of call reception, message reception, alarm output, communication connection of the electronic device, execution of a designated application, a user input on at least one of a key, a button, and a user interface of at least one external electronic device interlocked with the electronic device, a designated gesture input using at least one external electronic device interlocked with the electronic device, and a voice input uttering a designated keyword.

3. The electronic device of claim 1, wherein the instructions, when executed by the at least one processor, cause the electronic device to identify at least one of a sliding function of the second housing relative to the first housing and a vibration output function of the electronic device as the at least one function defined to be executed in response to the occurrence of the designated event.

4. The electronic device of claim 1, further comprising:
at least one sensor;
a battery; and
a wireless communication circuit,
wherein the instructions, when executed by the at least one processor, cause the electronic device to identify whether the performance of the wireless charging of the electronic device is maintained, based on at least one of posture information of the electronic device identified by using the at least one sensor, state information of the battery identified by using the at least one sensor, in-band communication state information between the electronic device and the external electronic device identified by using the wireless communication circuit or the wireless charging coil, and monitoring information on whether a signal comprising at least one of a control error packet (CEP) and a received power packet (RPP) is received from the external electronic device by using the wireless communication circuit.

5. The electronic device of claim 4, wherein the instructions, when executed by the at least one processor, cause the electronic device to:
based on at least one of the posture information of the electronic device, the state information of the battery, the in-band communication state information, and the monitoring information, determine whether the wireless charging with the external electronic device is interrupted;
based on determining that the wireless charging with the external electronic device is interrupted, determine whether the occurrence of the event is maintained; and
based on determining that the occurrence of the event is maintained, execute the at least one function that is at least temporarily restricted.

6. The electronic device of claim 1, wherein the instructions, when executed by the at least one processor, cause the electronic device to execute the at least one function that is at least temporarily restricted, based on determining that the occurrence of the event is maintained at a time when the wireless charging with the external electronic device is interrupted.

7. The electronic device of claim 1, wherein the instructions, when executed by the at least one processor, cause the electronic device to:
determine whether another external electronic device is present within a designated distance from the electronic device; and
further based on determining that the other external electronic device is present within the designated distance from the electronic device, at least temporarily restrict execution of the at least one function while performing the wireless charging.

8. The electronic device of claim 7, wherein the instructions, when executed by the at least one processor, cause the electronic device to:
receive information on an activation state of a wireless charging coil of the external electronic device from the external electronic device; and
based on the information on the activation state of the wireless charging coil of the external electronic device, determine whether the other external electronic device is present within the designated distance from the electronic device.

9. A wireless charging method of an electronic device comprising a first housing and a second housing which is coupled to the first housing to be slidable relative to the first housing, the wireless charging method comprising:
performing wireless charging with an external electronic device by using a wireless charging coil of the electronic device;
identifying occurrence of a designated event while performing the wireless charging; and
based on identifying the occurrence of the designated event, at least temporarily restricting, while performing the wireless charging, execution of at least one function defined to be executed in response to the occurrence of the designated event,
wherein the at least one function is related with a movement of at least a part of the electronic device.

10. The wireless charging method of claim 9, wherein identifying the occurrence of the designated event comprises identifying the occurrence of the event comprising at least one of call reception, message reception, alarm output, communication connection of the electronic device, execution of a designated application, a user input on at least one of a key, a button, and a user interface of at least one external electronic device interlocked with the electronic device, a designated gesture input using at least one external electronic device interlocked with the electronic device, and a voice input uttering a designated keyword.

11. The wireless charging method of claim 9, wherein identifying the occurrence of the designated event comprises identifying at least one of a sliding function of the second housing relative to the first housing and a vibration output function of the electronic device as the at least one function defined to be executed in response to the occurrence of the designated event.

12. The wireless charging method of claim 9, wherein at least temporarily restricting the execution of the at least one function while performing the wireless charging comprises identifying whether the performance of the wireless charging of the electronic device is maintained, based on at least one of posture information of the electronic device identified by using at least one sensor, state information of a battery of the electronic device identified by using the at least one sensor, in-band communication state information between the electronic device and the external electronic device identified by using a wireless communication circuit of the electronic device, and monitoring information on whether a signal comprising at least one of a control error packet (CEP) and a received power packet (RPP) is received from the external electronic device by using the wireless communication circuit.

13. The wireless charging method of claim 12, wherein at least temporarily restricting the execution of the at least one function while performing the wireless charging comprises:
based on at least one of the posture information of the electronic device, the state information of the battery, the in-band communication state information, and the monitoring information, determining whether the wireless charging with the external electronic device is interrupted;
based on determining that the wireless charging with the external electronic device is interrupted, determining whether the occurrence of the event is maintained; and
based on determining that the occurrence of the event is maintained, executing the at least one function that is at least temporarily restricted.

14. The wireless charging method of claim 9, wherein at least temporarily restricting the execution of the at least one function while performing the wireless charging comprises executing the at least one function that is at least temporarily restricted, based on determining that the occurrence of the event is maintained at a time when the wireless charging with the external electronic device is interrupted.

15. The wireless charging method of claim 9, further comprising:
receiving information on an activation state of a wireless charging coil of the external electronic device from the external electronic device;
based on the information on the activation state of the wireless charging coil of the external electronic device, determining whether another external electronic device is present within a designated distance from the electronic device; and
further based on determining that the other external electronic device is present within the designated distance from the electronic device, at least temporarily restricting execution of the at least one function while performing the wireless charging.
